(19) Europäisches Patentamt
European Patent Office
Office européen des brevets

(11) EP 3 083 789 B1

(12) EUROPÄISCHE PATENTSCHRIFT

(45) Veröffentlichungstag und Bekanntmachung des Hinweises auf die Patenterteilung:
**27.02.2019 Patentblatt 2019/09**

(21) Anmeldenummer: **14816187.0**

(22) Anmeldetag: **11.12.2014**

(51) Int Cl.:
***C08K 3/00*** *(2018.01)* ***C08K 3/20*** *(2006.01)*
***C08K 3/22*** *(2006.01)* ***C08K 5/5419*** *(2006.01)*

(86) Internationale Anmeldenummer:
**PCT/EP2014/077307**

(87) Internationale Veröffentlichungsnummer:
**WO 2015/091177 (25.06.2015 Gazette 2015/25)**

# (54) OBERFLÄCHENBEHANDLUNG VON PARTIKELN UND DEREN VERWENDUNG

SURFACE TREATMENT OF PARTICLES AND THEIR USE

TRAITEMENT DE SURFACE DE PARTICULES ET UTILISATION DE CELLES-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2013 DE 102013226798**

(43) Veröffentlichungstag der Anmeldung:
**26.10.2016 Patentblatt 2016/43**

(73) Patentinhaber: **Evonik Degussa GmbH**
**45128 Essen (DE)**

(72) Erfinder:
- **LEHMANN, Kathrin**
  **51377 Leverkusen (DE)**
- **NAWRACALA, Angela**
  **51469 Bergisch Gladbach (DE)**
- **HENNING, Frauke**
  **45259 Essen (DE)**
- **MUND, Christian**
  **45149 Essen (DE)**

(56) Entgegenhaltungen:
**JP-A- H08 120 191 US-A- 5 387 467**

EP 3 083 789 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gebiet der Erfindung:

Die Erfindung betrifft Polymerzusammensetzungen enthaltend anorganische oder organische Partikel, die entweder vor der Herstellung der Zusammensetzungen oberflächenbehandelt wurden oder durch die Herstellung der Zusammensetzungen durch spezielle Polyether modifizierte Siloxane dispergiert werden.

Stand der Technik:

Kunststoffe, die zu entsprechenden Polymerzusammensetzungen formuliert werden, werden in die wesentlichen Gruppen der Thermoplaste und Duroplaste unterteilt.

Dabei bezeichnet man solche Polymere, die oberhalb der Gebrauchstemperatur einen Fließübergangsbereich besitzen als Thermoplaste. Thermoplaste sind lineare oder verzweigte Polymere, die im Falle amorpher Thermoplaste oberhalb der Glasübergangstemperatur (Tg), im Falle (teil)kristalliner Thermoplaste oberhalb der Schmelztemperatur (Tm) prinzipiell fließfähig werden. Sie können im erweichten Zustand durch Pressen, Extrudieren, Spritzgießen oder andere Formgebungsverfahren zu Formteilen verarbeitet werden. Die Kettenbeweglichkeit wird dabei so groß, dass die Polymermoleküle leicht aneinander abgleiten und der Werkstoff den schmelzflüssigen Zustand erreicht (Fließbereich, Polymerschmelze). Zu den Thermoplasten gehören weiterhin auch thermoplastisch verarbeitbare Kunststoffe mit ausgeprägten entropieelastischen Eigenschaften, die sogenannten thermoplastischen Elastomeren. Zu den Thermoplasten gehören alle aus linearen oder thermolabil vernetzten Polymermoleküle bestehenden Kunststoffe, zum Beispiel Polyolefine, Vinylpolymere, Polyester, Polyacetale, Polyacetatae, Polycarbonate, zum Teil auch Polyurethane und lonomere aber auch TPEs - thermoplastische Elastomere (RÖMPP ONLINE, Vers. 3.7, Carlowitz u. Wierer, Kunststoffe (Merkblätter), 1. Kapitel Thermoplaste, Berlin: Springer Verlag (1987), Domininghaus, S. 95 ff).

Duroplaste sind Kunststoffe, die durch irreversible und engmaschige Vernetzung über kovalente Bindungen aus Oligomeren (technisch: Prepolymeren), seltener aus Monomeren oder Polymeren entstehen. Das Wort "Duroplast" wird dabei sowohl für die Rohstoffe vor der Vernetzung (siehe Reaktionsharze) als auch als Sammelbezeichnung für die ausgehärteten, zumeist vollständig amorphen Harze verwendet. Duroplaste sind bei niedrigen Temperaturen stahlelastisch, und auch bei höheren Temperaturen können sie nicht viskos fließen, sondern verhalten sich bei sehr begrenzter Deformierbarkeit elastisch. Zu den Duroplasten gehören unter anderem die technisch wichtigen Stoffgruppen der Diallylphthalat-Harze (DAP), Epoxidharze (EP), Harnstoff-Formaldehyd-Harze (UF), Melamin-Formaldehyd-Harze (MF), Melamin-Phenol-Formaldehyd-Harze (MPF), Phenol-Formaldehyd-Harze und ungesättigten Polyesterharze (UPES) (RÖMPP ONLINE, Vers. 3.7, Becker, G. W.; Braun, D.; Woebcken, W., Kunststoff-Handbuch, Band 10: Duroplaste, 2. Aufl.; Hanser: München,(1988); Elias (6.) 1, 7, 476 ff.).

Gilbert (Gilbert, Varshney, van Soom und Schiller, "Plate-out in PVC Extrusion - I. Analysis of plate-out", Journal of Vinyl and Additive Technology, (14) 1, 2008, 3-9) beschreibt die Verwendung von Ca-stearat oder andere Seifen oder die entsprechenden Carbonsäuren wie Stearinsäure eingesetzt, um eine Oberflächenbehandlung von Titandioxid oder Bariumsulfat oder seinen Mischungen zu realisieren Nach dieser Methodik können unerwünschte Nebeneffekte entstehen, da derartige Produkte häufig in großtechnischen Prozessen bei der Pigmentherstellung entweder nicht einfach zu verwenden sind oder auch zu sogenanntem Plate out bei der Produktion von hochgefüllten Masterbatchen, also Pigmentkonzentraten der Pigmente in einer thermoplastischen Matrix führen. Man versteht darunter das Aufbrennen der thermoplastischen Pigmentmischung auf der Schnecke oder des Inneren des Gehäuses der Extrusionsstrecke. Dies verursacht aufwendige Reinigung besonders bei Farbwechseln. Darüber hinaus können sich jederzeit derartig aufgebrannte Schichten lösen und führen zur Stippenbildung im Masterbatch und später auch in der Endapplikation also z.B. zu Stippen in dünnschichtigen Folien.

Weiterhin ist aus GB 1 288 581 die Verwendung von Siliconölen unterschiedlicher Kettenlänge/Viskosität bekannt, die man entweder beim Vermahlen des Pigmentes aufsprüht oder als Emulsion in eine Pigmentslurry eintragen kann. Pigmente mit Siliconöloberflächenbehandlung weisen zwar eine gute Hydrophobie auf und sind wegen ihrer niedrigen Oberflächenenergie im Allgemeinen dafür bekannt, dass sie leicht in eine niedrigenergetische Kunststoffumgebung eingebracht werden können. Derartig behandelte Pigmente wiesen verschieden Nachteile auf:

1. Silikonölbehandelte Partikel weisen eine starke Staubneigung auf, die bei der Weiterverarbeitung sehr problematisch und gegeben falls sogar sicherheitsrelevant sein kann.
2. Eine niedrige Schüttdichte der silikonölbehandelten Pigmente führt zu Problemen bei der Abpackung des Pigmentes in Sackware, Big Bags oder Silo. Eine hohe Luftmenge erfordert die Befüllung mit einer niedrigeren Masse pro Packungseinheit. Wie sich die Sackware nicht flach auf einer Palette stapelbar ist, erhöht sich der Umreifungsaufwand oder Aufwand bei Umfolierung der Paletten. Automatische Abpackung mit Luftförderung, welche als Standard mit hoher Leistung anzusehen sind, weisen dieses Problem insbesondere auf.

Siliconöle als Oberflächenbehandlung können jedoch zu weiteren Problemen bei der Herstellung von Gebrauchsgegenständen führen, z.B. mangelnde Überlackierbarkeit, Bedruckbarkeit und/oder Verschweißbarkeit von Folien, insbesondere kann es in Multischichtfolien bis zur Delaminierung von Schichten und zum Funktionsverlust kommen (Plastics Additives: Advanced Industrial Analysis, 2006, Jan C. J. Bart, Seite 419 - 420; IOC Press, Niederlande, ISBN 1-58603-533-9; Broschüre Trouble Shouting Guide-Siegwerk, März 2013).

JP H08 120191 A offenbart die Oberflächenbehandlung von Farbpartikeln mit einem polyethermodifiziertem Polysiloxan der Formel 1 und ihre Verwendung in Coatings enthaltend ein Harz ausgewählt aus Polyacrylat, Polyester, Polyurethan und Epoxy-Harz.

Aus DE 41 40 793, EP 0 546 407, EP 0 546 406 ist bekannt, dass Silikonöle oder silanbasierte Strukturen wie Methacryloxypropyltrimethoxysilan dazu geeignet sind, auch oxidische Oberflächen zu belegen, um so über eine Hydrophobierung bzw. Funktionalisierung der Oberfläche und eine Reduzierung der Viskosität, höhere Kompatibilität mit dem umgebenden organischen Medium und somit eine höhere Effizienz der eingesetzten Pigmente zu ermöglichen. Silane sind hydrolyseempfindlich und bedürfen im Allgemeinen einer erhöhten Temperatur von etwa 80°C um die Silylfunktionalität an der Pigment- oder Füllstoffoberfläche zu aktivieren und eine polymere Struktur auf der Oberfläche auszubilden. Viele Prozesse in der Pigmentherstellung sind wässrige Slurryprozesse oder die Pigmente wie Titandioxid entstehen durch Fällungsreaktionen in Wasser, so dass Bedarf besteht Oberflächenbehandlungsmittel in wässriger Form z.B. emulgiert in einfacher Form in den Prozess eingebracht werden können. Andererseits gibt es den Bedarf in Prozessen in denen es zur Oberflächenbehandlung von trockenen Pigmenten oder gerade Füllstoffen kommt, dass in diesen Prozessen eine Temperaturerhöhung über die Umgebungstemperatur zusätzliche Kosten verursacht, was für die Anbindung von Silanen ein Prozessnachteil ist, denn dafür sind Temperaturen oberhalb von 80°C für die Abspaltung des Alkohols erforderlich. Deshalb bestand der Bedarf eine Oberflächenbehandlung für trockene Vermahl- oder Mischprozesse zu haben, die gegebenenfalls auch ohne Temperaturerhöhung die Oberflächenmodifikation garantiert.

Dies gilt besonders für Füllstoffe oder auch ausgewählte Flammschutzmittel wie z.B. ATH, denn diese werden häufig nur bergmännisch abgebaut, vermahlen und dann klassiert, haben jedoch im allgemeinen keinen nasschemischen oder physikalischen Reinigungsprozess, so dass keine Trocknung erforderlich ist und damit das Aufheizen, um eine Oberflächenbehandlung zu fixieren ein zusätzlicher Prozessschritt ist, für den auch andere Aggregate erforderlich sind, um Tonnagen von mehreren Tausend Tonnen zu produzieren.

Die Dispergierung von hydrophilen anorganischen Pigmenten wie z.B. Eisenoxid oder sehr polaren organischen Pigmenten stellt besonders in unpolaren Polymeren wie z.B. Polyolefinen ein Problem dar.

Entweder muss großer Aufwand durch lange Dispergierzeiten in Kauf genommen werden oder eine ungenügende Dispergierung mit einem nicht akzeptablen Fehlerbild des Endgutes resultiert. Derartige Fehlerbilder können sein: Stippenbildung in Kunststoff-Folien, die nicht nur unästhetisch sind, sondern bis zur Lochbildung und damit Undichtigkeiten in der Verpackung führen können, Stippen im gespritzten Kunststoffteil können zu mechanischen Defekten führen also eine deutlich geringere Zugfestigkeit oder Schlagzähigkeit bewirken und damit zu einer hohen Ausschussrate in der Spritzgussproduktion oder sogar zu Versagen von sicherheitsrelevanten Bauteilen aus Kunststoff im Automobil oder Elektronikbereich.

Aufgabe der Erfindung ist daher zumindest einen Nachteil des Standes der Technik zu überwinden.

Überraschenderweise wurde gefunden, dass spezielle Polyether modifizierte Siloxane wie in den Ansprüchen beschrieben die Aufgabe lösen.

Gegenstand der vorliegenden Erfindung sind deshalb Polymerzusammensetzungen enthaltend

a) feste Partikel,
b) mindestens ein Polymer, ausgewählt aus Thermoplasten oder Duromeren,
c) mindestens eine Verbindung der Formel (I),

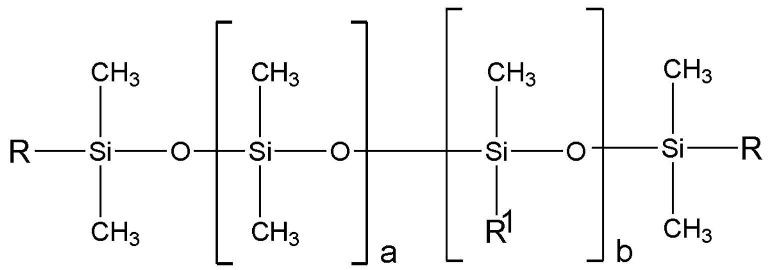

(I)

mit

R gleich oder verschieden $R^1$, Methyl oder Hydroxy, bevorzugt Methyl,
$R^1$ gleich oder verschieden einem Polyetherrest der Formel (III) ist

$$-Z-(O-C_mH_{2m-(n-1)})_o-[O-((AO)-R^{3})]_n \qquad \text{(III)}$$

mit

Z gleich einem verzweigten oder unverzweigten Alkylenrest mit 2 bis 4 Kohlenstoffatomen, bevorzugt 3 Kohlenstoffatomen
m 2 bis 4, bevorzugt 3
n 1 bis 3, bevorzugt 1 oder 2, insbesondere bevorzugt 1
o 0 oder 1, bevorzugt 0
AO gleich oder verschieden einem Oxyalkylenrest enthaltend Oxyethylen-, Oxypropylen- und/oder Oxybutylenreste,
$R^3$ gleich oder verschieden Wasserstoff, ein Alkylrest mit 1 bis 4 Kohlenstoffatomen,
und mit der Maßgabe, dass in $R^1$ die Summe aus Kohlenstoff- und Sauerstoffatomen mindestens 70 ist,
a 20 bis 200, bevorzugt von 30, von 40, von 50, von 60 bis 170, bis 160, bis 150, bis 140, bis 130, bis 120, bis 110 und insbesondere bevorzugt 70 bis 100,
b 1 bis 50, bevorzugt von 2, von 3, von 4 bis 30, bis 25, bis 20 und insbesondere bevorzugt 5 bis 15,

mit der Maßgabe, dass wenn keiner der Reste R gleich $R^1$ ist, b mindestens 3 ist,
d) optional weitere Komponenten

Bevorzugt weist der Oxyalkylenrest AO bis zu 50 Gew.-% Oxyethylengruppen, mehr bevorzugt bis zu 40 Gew.-%, besonders bevorzugt bis zu 35, 30, 25, 20, 15, 10 Gew.-%, insbesondere bevorzugt bis zu 5 Gew.-%. Bevorzugt weist der Oxyalkylenrest AO 0 Gew.-%, mehr bevorzugt mindestens 5, 10, 15, 20, 25, 30 Gew.-% und insbesondere mindestens 35 Gew.-% Oxyethylengruppen auf. Der Oxyethylengehalt ist hierbei bezogen auf die Gesamtmasse des Restes $R^1$.

Bevorzugt weist der Oxyalkylenrest AO von 0 bis zu 50 Gew.-%, bevorzugt von 5 bis zu 35 Gew.-%, mehr bevorzugt von 15 bis 30 Gew.-% Oxyethylengruppen bezogen auf die Gesamtmasse des Restes $R^1$ auf.

Bei Anwesenheit von Oxybutylengruppen ist der molare Anteil von Oxybutylengruppen bezogen auf die Summe aus Oxypropylen- und Oxybutylengruppen bevorzugt maximal 50%, bevorzugt bis zu 45, 40, 35, 30, 25, 20, 15, 10 und insbesondere bis zu 5%.

Bevorzugt ist der numerische Anteil unmodifizierter Siloxanfragmente mit dem Index a bis zu 20 mal so groß wie der Anteil mit Polyether modifizierten Siloxanfragmente mit dem Index b, bevorzugt bis zu 20 mal, bis zu 19, bis zu 18, bis zu 17, bis zu 16, bis zu 15, bis zu 14, bis zu 13, bis zu 12, bis zu 11, bis zu 10, bis zu 9 und insbesondere bevorzugt bis zu 8 mal. Bevorzugt ist der Index a mindestens 7 mal dem Index b, mehr bevorzugt mindestens 8 mal, 9 mal, 10 mal, 11 mal und insbesondere mindestens 12 mal dem Index b.

Bevorzugt ist das numerische Verhältnis von Index a zu Index b gleich 8 bis 18, bevorzugt 9 bis 15 und insbesondere bevorzugt 10 bis 12.

Bevorzugt ist der Index o gleich null.

Bevorzugt ist das Fragment mit dem Index o ein unverzweigter Rest, mehr bevorzugt ein unverzweigter Rest mit 3 Kohlenstoffatomen. Besonders bevorzugt ist das Fragment mit dem Index o ein Glycerylrest, insbesondere bevorzugt ein n-Glycerylrest, der terminal die Gruppe -O-Z trägt.

Bevorzugt ist der Rest Z ein Propylenrest.

Bevorzugt ist der Rest $R^3$ ein Wasserstoff.

Bevorzugt werden die erfindungsgemäßen Partikel durch Oberflächenbehandlung mit Verbindungen der Formel (I) erhalten, indem
$R^1$ gleich oder verschieden ein $-(CH_2)_p-O-EO_x-PO_y-BO_z-R^3$,
mit der Maßgabe, dass in $R^1$ die Summe aus Kohlenstoff- und Sauerstoffatomen mindestens 70 ist,
EO Oxyethylen,
PO Oxypropylen,
BO Oxybutylen
x 0 bis 20, bevorzugt 3 bis 15, insbesondere bevorzugt 4 bis 10,
y 5 bis 100, bevorzugt 8 bis 50, insbesondere bevorzugt 10 bis 30,
z 0 bis 20,

p gleich 2 bis 4, bevorzugt 2 und/oder 3,

Bevorzugt ist der Index x kleiner oder gleich 1,2 bevorzugt kleiner 1,1, mehr bevorzugt kleiner 1, kleiner 0,9, kleiner 0,8, kleiner 0,7, kleiner 0,6, kleiner 0,5, kleiner 0,4, kleiner 0,3 und insbesondere kleiner 0,2 ist..

Bevorzugt ist der Index x zwischen 0,05 und 1,2 mal der Summe der Indices (y + z), bevorzugt zwischen 0,07 und 0,8 mal, insbesondere zwischen 0,1 und 0,5 mal.

Weiterhin bevorzugt ist, dass der Index z kleiner oder gleich dem Index y, bevorzugt kleiner oder gleich der Hälfte, dem Drittel, dem Viertel, dem Fünftel, dem Sechstel, dem Siebtel, dem Achtel, dem Neuntel und insbesondere kleiner oder gleich dem Zehntel des Indexes y ist.

Bevorzugt ist eine Oxybutylengruppe linear, also $-(CH_2)_4-O-$ und/oder verzweigt, also $-CH(CH_2CH_3)CH_2-O-$.

Besonders bevorzugt sind Partikel, die mit einem Polyether modifizierten Siloxan der Formel (I) oberflächenbehandelt sind, wobei der Rest R gleich Methyl und der Rest $R^3$ gleich Wasserstoff, sowie die Indices

a 80 bis 95,
b 5 bis 8,
x 3 bis 5,
y 10 bis 25 und
z 0
sind.

Polyether modifizierten Siloxane im Sinne der Erfindung sind Verbindungen der Formel (I).

Die Fragmente der Formeln (I), (II), (III), sowie der Fragmente AO und $R^1$ können statistisch aufgebaut sein.

Statistische Verteilungen sind blockweise aufgebaut mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Bevorzugt enthalten die erfindungsgemäßen Polymerzusammensetzungen Verbindungen der Formel (I) mit einem bestimmten Gehalt von 0,05 bis 10 Gew.-%, bevorzugt von 0,1 bis 5 Gew.-%, mehr bevorzugt von 0,5 bis 3 Gew.-%, insbesondere von 1bis 2,5 Gew.-% bezogen auf die Gesamtzusammensetzung.

Weiterhin bevorzugt sind Polymerzusammensetzungen, deren Partikel farbgebende Pigmentpartikel sind.

Ebenfalls bevorzugt sind Polymerzusammensetzungen enthaltend Partikel mit Ausnahme von Titandioxid, Bariumsulfat, Zinksulfid und Lithopone, die vor der Mischung mit Komponente b) mit Verbindungen der Formel (I) behandelt worden sind.

Mehr bevorzugt sind Polymerzusammensetzungen enthaltend Verbindungen der Formel (I) mit einem Gehalt von 0,01 bis 3 Gew.-%, bevorzugt 0,05 bis 2 Gew.-%, mehr bevorzugt von 0,1 bis 2 Gew.-% und insbesondere bevorzugt von 0,15 bis 1 Gew.-% bezogen auf die Partikelmasse als Teil der Zusammensetzung.

Weiter mehr bevorzugt sind Polymerzusammensetzungen dadurch gekennzeichnet, dass die Zusammensetzungen Partikel ausgewählt aus ATH und MDH aufweisen. Insbesondere bevorzugt sind Polymerzusammensetzungen, in denen die Partikel vor der Mischung mit Komponente b) mit Verbindungen der Formel (I) behandelt worden sind, wobei die Zusammensetzungen maximal 0,5 Gew.-%, bevorzugt maximal 0,45 Gew.-%, mehr bevorzugt maximal 0,4 Gew.-% Wasser enthalten bezogen auf die Gesamtzusammensetzungen.

Ein Vorteil der erfindungsgemäßen Partikel und erfindungsgemäßen Zusammensetzungen ist, dass die Druckfilterwerte gegenüber dem Stand der Technik erniedrigt werden. Dies steigert die Standzeiten der verarbeitenden Geräte, insbesondere der Extruder und verringert deren Reinigungszyklen.

Weiterhin vorteilhaft ist eine gute Dispergierung zur Vermeidung von Faserbrüchen und/oder Stippen der Produkte.

Ebenfalls vorteilhaft ist die hohe Temperaturbeständigkeit der erfindungsgemäßen Partikel und der erfindungsgemäßen Zusammensetzungen.

Vorteilhaft sind die erfindungsgemäßen Zusammensetzungen gegenüber dem Stand der Technik, da eine deutliche Erhöhung der Zugfestigkeit, der Bruchdehnung und/oder der Schlagzähigkeit für Kunststoffformkörper zu beobachten ist.

Weiterhin vorteilhaft sind die erfindungsgemäßen Zusammensetzungen, die eine deutlich reduzierte Rauchgas- und Hitzeentwicklung von Flammschutzcompounds beobachtet wird. Bei Bestimmung der Brandschutzklassen nach UL 94 VO kann die Brandschutzklasse -VO mit niedrigeren Füllgraden erreicht werde. Das bedeutet, die erfindungsgemäßen Flammschutzcompounds weisen mit einem niedrigeren Gehalt an Pigmenten in der gleichen Matrix einen höheren Flammschutz auf.

Weiterhin vorteilhaft sind die erfindungsgemäßen Zusammensetzungen, da die Wasseraufnahme der Zusammensetzungen reduziert ist. Damit sind die Materialien besser geeignet zur Isolierung elektrisch leitfähiger Materialien

Die erfindungsgemäßen Zusammensetzungen weisen weiterhin den Vorteil auf, dass die verwendeten Partikel

eine verbesserte Fließfähigkeit zeigen.

Weiterhin vorteilhaft ist die Verwendung der oberflächenbehandelten Partikel in den erfindungsgemäßen Zusammensetzungen, da die Packungsdichte der oberflächenbehandelten Partikel steigt, da die Schüttdichte nach der Oberflächenbehandlung steigt. Damit reduzieren sich Transport und/oder Lagerkosten.

Ein weiterer Vorteil der erfindungsgemäßen Zusammensetzungen ist deren vielseitige Verwendung in unterschiedlichen Formulierungen. Dies äußert sich darin, dass die Zusammensetzungen auf Basis von Thermoplasten, Duroplasten und Weichmachern formuliert werden können. Für die weiterverarbeitende Industrie, wie z.B. Pastenhersteller, Compoundeure und Masterbatcher ist dies vorteilhaft, dass die erfindungsgemäßen Zusammensetzungen ohne weitere Anpassungen verwendet werden können. Dies generiert einen finanziellen Vorteil und Formulierungsflexibilität.

Primärpartikel im Sinne der Erfindung können Mischungen von Pigmenten, insbesondere farbigen Pigmenten sein, welche dann erfindungsgemäß oberflächenbehandelt werden.

Bevorzugt weisen die erfindungsgemäßen Zusammensetzungen eine Verbesserung der Wasseraufnahme von 25% gegenüber den Zusammensetzungen auf, die nicht eine Verbindung der Formel (I) enthalten. Eine Verbesserung der Wasseraufnahme ist eine Verringerung.

Die Packungsdichte kann durch Einbringen einer definierten Masse z.B. 70g in einen senkrechten Zylinder z.B. einen Messzylinder z.B. mit einem Volumen von 100 ml geschehen. Nach dem Einbringen wird das Volumen an der Gradation abgelesen und man erhält die Packungsdichte nach der dem Fachmann geläufigen Relation.

Die Fließfähigkeit kann durch Bestimmung des MFI (melt flow index) gemäß DIN EN ISO 1133 z.B. mit einem Meltfixer der Firma SWO Polymertechnik bestimmt werden.

Bevorzugt weisen die erfindungsgemäßen Zusammensetzungen einen MFI auf, der mindestens 10% über dem MFI liegt, welcher mit der gleichen Zusammensetzung bestimmt wurde, die die gleichen Partikel in nicht oberflächenbehandelter Form enthält. Bevorzugt weisen die Vergleichszusammensetzungen die gleichen Komponenten in den gleichen Massenverhältnissen wie die geprüften erfindungsgemäßen Zusammensetzungen auf, der Unterschied liegt lediglich in der fehlenden Oberflächenbehandlung der Partikel der Vergleichszusammensetzungen.

Die Dispergierbarkeit der erfindungsgemäß oberflächenbehandelten Partikel kann anhand des Druckanstieges vor einem Filter (mit anzugebender Maschenweite), der beim Extrudieren einer Polymerschmelze über ein Siebpaket entsteht, bestimmt und bewertet werden (Druckfilterwert). Die Prüfung kann z.B. in Anlehnung an die DIN EN 13900-5:2005 durchgeführt werden.

Bevorzugt weisen die erfindungsgemäßen Zusammensetzungen (basierend auf Polypropylen unter Verwendung von organischen Farbpigmenten) in Form von Masterbatches einen Druckfilterwert (9 $\mu$m) von bis zu 3 bar * $cm^2$ / g, mehr bevorzugt von bis zu 2,5 bar * $cm^2$ / g, weiter mehr bevorzugt von bis zu 2,0 bar * $cm^2$ / g und insbesondere von bis zu 1,5 bar * $cm^2$ / g unter Verwendung eines Siebes mit einer Maschenweite von 9 $\mu$m auf.

Eine weitere Möglichkeit der Beurteilung der Dispergierbarkeit besteht in der Bestimmung und Bewertung der Anzahl von Agglomeraten in einer Flachfolie. Agglomerate sind dabei als Stippen erkennbar. Die Anzahl der Stippen sollte möglichst gering sein.

Eine weitere Möglichkeit der Beurteilung der Dispergierbarkeit besteht in der Bestimmung der Körnigkeit von Pigmenten z.B. in einer Pigmentpaste oder Füllstoffpaste unter definierten Dispergierbedingungen. Hierzu ist zum Beispiel ein Grindometer zum Beispiel nach Hegman geeignet. Die Bestimmung kann z.B. nach DIN EN 21524 (entsprechend ISO 1525) durchgeführt werden.

Ein weiterer Gegenstand der Erfindung ist die Verwendung der erfindungsgemäßen Polymerzusammensetzungen zur Verarbeitung zu Kunststoffformkörpern, -folien und/oder -schäumen.

Bevorzugte Polymere der erfindungsgemäßen Zusammensetzungen sind Duroplasten oder Thermoplasten. Als Duromere sind beispielsweise ungesättigte Polyesterharze (UP), Phenolharze, Melaminharze, Formaldehyd-Formmassen, Vinylester-Harze, Diallylphthalat-Harze, Silikonharze oder Harnstoffharze geeignet. Als thermoplastische Materialien sind beispielsweise Polyethylen, Polypropylen, Polyester, Polyamid, PET, Polystyrol, dessen Copolymerisate und Blends, Polycarbonat, PMMA, oder Polyvinylchlorid geeignet.

Bevorzugt sind die erfindungsgemäßen Zusammensetzungen, die um mindestens eine Brandklasse der UL 94 besser sind, gegenüber den Zusammensetzungen, die nicht eine Verbindung der Formel (I) enthalten.

Bevorzugt werden die thermoplasthaltigen erfindungsgemäßen Zusammensetzungen zu Masterbatchen und/oder Compounds verarbeitet. Die Compounds weisen bevorzugt einen erhöhten Flammschutz auf, insbesondere bevorzugt mindestens einen Flammschutz von Brandklasse V2 nach AL94 auf.

Bevorzugt sind die erfindungsgemäßen Zusammensetzungen, bei denen mindestens 80% der Probenkörper die Einstufung in V-0 erfüllen, bevorzugt alle Probenkörper. Weiterhin bevorzugt dass höchstens 20 % der Probenkörper lediglich die Klasse V-1 erfüllen alle übrigen aber diese Klassifizierung übertreffen (V-0).

Mehr bevorzugt sind die erfindungsgemäßen Zusammensetzungen, die mit einem Füllgrad von 61 Gew.-% mit oberflächenbehandelten Partikeln alle Probenkörper die Brandklasse V-0 der OL 94 erfüllen, und weiterhin bevorzugt dass bei einem Füllgrad von 59 Gew.-% höchstens 20% der Probenkörper die Klasse V-1 erfüllen und alle übrigen aber die Klasse V-0 erfüllen, insbesondere bevorzugt dass alle Probenkörper der erfindungsgemäßen Zusammensetzungen

die Klasse V-0 erfüllen.

Weiterhin bevorzugt werden die duromerhaltigen erfindungsgemäßen Zusammensetzungen zu Kunststoffformkörpern verarbeitet. Die Kunststoffformkörper können bevorzugt aus geschäumten Materialien bestehen.

Weiterhin bevorzugt ist die Zugfestigkeit von erfindungsgemäßen Kunststoffformkörpern gegenüber dem Stand der Technik (enthaltend Silikonöl behandelte Partikel) um mindestens 10 % verbessert, also entsprechend erhöht. Weiterhin bevorzugt ist die Schlagzähigkeit gegenüber dem Stand der Technik (enthaltend Silikonöl behandelte Partikel) um mindestens 10 %, bevorzugt mindestens 15 %, insbesondere bevorzugt mindestens 20 % verbessert, also entsprechend erhöht. Insbesondere bevorzugt weisen die erfindungsgemäßen Kunststoffformkörper basierend auf Polyestern eine Verbesserung sowohl der Zugfestigkeit als auch der Schlagzähigkeit von mindestens 10 % auf, gegenüber vergleichbaren Kunststoffformkörpern, die keine Verbindungen der Formel (I) enthalten.

Bevorzugt können Verarbeitungsprozesse der erfindungsgemäßen Zusammensetzungen im Temperaturbereich von 5 bis 300°C, besonders bevorzugt von 25 bis 250°C und insbesondere bevorzugt von 50 bis 200°C durchgeführt werden ohne die Eigenschaften nachteilig zu beeinflussen.

Grundsätzlich können Zusammensetzungen enthaltend die oberflächenbehandelten Partikel nach den Verfahren des Standes der Technik hergestellt werden, bevorzugt werden sie jedoch durch das nachfolgend beschriebene Verfahren hergestellt.

Ein weiterer Gegenstand der Erfindung ist ein Verfahren zur Oberflächenbehandlung von Pigmentpartikeln, Flammschutzmittel oder anderen partikulären Materialien mit Ausnahme von Titandioxid-, Bariumsulfat-, Zinksulfid- und Lithopone-Partikeln, in dem die Primärpartikel bei der Behandlung mit mindestens einer Verbindung der Formel (I)

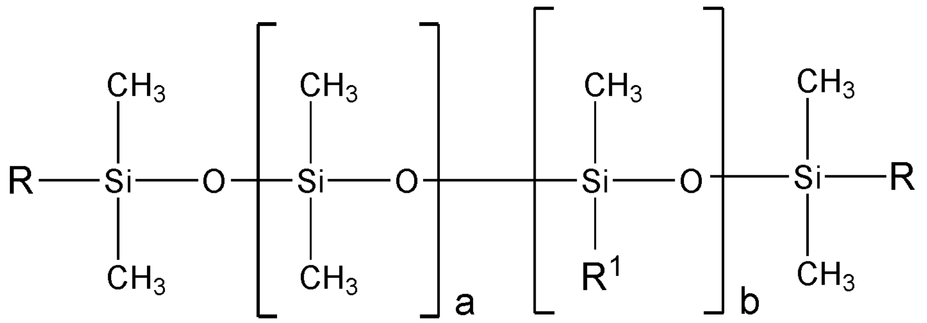

(I)

mit

- R gleich oder verschieden $R^1$, Methyl oder Hydroxy,
- $R^1$ gleich oder verschieden einem Polyetherrest der Formel (III)

$$-Z-(O-C_mH_{2m-(n-1)})_o-[O-((AO)-R^{3]}]_n \quad (III)$$

mit

Z gleich einem verzweigten oder unverzweigten Alkylenrest mit 2 bis 4 Kohlenstoffatomen, bevorzugt 3 Kohlenstoffatomen
m 2 bis 4, bevorzugt 3
n 1 bis 3, bevorzugt 1 oder 2, insbesondere bevorzugt 1
o 0 oder 1, bevorzugt 0
AO gleich oder verschieden einem Oxyalkylenrest enthaltend Oxyethylen-, Oxypropylen- und/oder Oxybutylenreste,
$R^3$ gleich oder verschieden Wasserstoff, ein Alkylrest mit 1 bis 4 Kohlenstoffatomen,
und mit der Maßgabe, dass in $R^1$ die Summe aus Kohlenstoff- und Sauerstoffatomen mindestens 70 ist,
a 20 bis 200, bevorzugt von 30, von 40, von 50, von 60 bis 170, bis 160, bis 150, bis 140, bis 130, bis 120, bis 110 und insbesondere bevorzugt 70 bis 100,
b 1 bis 50, bevorzugt von 2, von 3, von 4 bis 30, bis 25, bis 20 und insbesondere bevorzugt 5 bis 15,

mit der Maßgabe, dass wenn keiner der Reste R gleich $R^1$ ist, b mindestens 3 ist,

in Kontakt gebracht werden, wobei die Verbindungen der Formel (I) mit einem Anteil von 0,01 bis 5 Gew.-%, bevorzugt 0,3 bis 5 Gew.-%, mehr bevorzugt 1 bis 4 Gew.-%, insbesondere bevorzugt mehr als 2 bis 4 Gew.-% bezogen

auf die Masse der zu behandelnden Primärpartikel eingesetzt werden.

Bevorzugt werden die Primärpartikel mit Ausnahme von $TiO_2$, $BaSO_4$, ZnS und/oder Lithopone-Primärpartikeln mit 0,01 bis 2 Gew.-%, bevorzugt 0,05 bis 1 Gew.-%, mehr bevorzugt 0,1 bis 0,8 Gew.-%, weiter mehr bevorzugt 0,2 bis 0,6 Gew.-% und insbesondere bevorzugt 0,3 bis 0,5 Gew.-% der Verbindungen der Formel (I) bezogen auf die Masse der zu behandelnden Primärpartikel behandelt.

Die Oberflächenbehandlung der Primärpartikel kann trocken oder nass erfolgen, im Falle der nassen Ausführung, wird diese bevorzugt in Emulsion ausgeführt. Wird die Oberflächenbehandlung mit einem emulgierten Polyether modifizierten Siloxan der Formel (I) durchgeführt, dann kann dies unter Zusatz von Emulgatoren erfolgen, bevorzugt wird kein Emulgator eingesetzt.

Bei der Zubereitung der Polyether modifizierten Siloxane der Formel (I) als Emulsionen sind Öl- in-Wasser Emulsionen enthaltend 5 bis 70 Gew.-% Polyether modifizierten Siloxane, 1 bis 20 Gew.-% Emulgatoren und 20 bis 94 Gew.-% Wasser bevorzugt. Verfahren zur Herstellung von Silikonemulsionen sind dem Fachmann bekannt. Üblicherweise erfolgt die Herstellung durch Verrühren aller Bestandteile und gegebenenfalls anschließendes Homogenisieren mit Strahldispergatoren, Rotor-Stator- oder Rotor-Rotor-Homogenisatoren, Kolloidmühlen oder Hochdruckhomogenisatoren. Methoden zur Emulsionserstellung werden z.B. in EP0093310, DE2555048, EP1132417 beschrieben.

Es können dabei alle Emulgatoren eingesetzt werden, die dem Fachmann zur Herstellung von Polysiloxan-Emulsionen bekannt sind, wie z.B. anionische, kationische, amphotere oder nichtionogene Emulgatoren.

Beispielhafte, jedoch nicht darauf beschränkte, anionische Emulgatoren sind: Alkylsulfate, insbesondere mit 8 bis 22 Kohlenstoffatomen in der Alkylgruppe, Alkyl- und Alkylarylethersulfate mit 8 bis 22 Kohlenstoffatomen in der Alkylgruppe und 1 bis 40 Oxyethylen- oder Oxypropylen-Einheiten. Sulfonate, insbesondere Alkylsulfonate mit 8 bis 22 Kohlenstoffatomen, Alkylarylsulfonate mit 8 bis 22 Kohlenstoffatomen, Mono- und Diester von SulfosuccinatenSalze von Carbonsäuren mit 8 bis 22 Kohlenstoffatomen in der Alkyl-, Aryl-, Alkaryl- oder Arylkyl-Einheit. Phosphorsäuremonoester und -diester und deren Salze, insbesondere Alkyl- und Alkarylphosphate mit 8 bis 22 Kohlenstoffatomen in der organischen Einheit, Alkylether- und Alkaryletherphosphate mit 8 bis 22 Kohlenstoffatomen in der Alkyl- oder Alkaryleinheit und 1 bis 40 Oxyethylen-Einheiten. Wie auf dem Gebiet der Emulgatoren wohl bekannt, können die Gegenionen im Falle von anionischen Emulgatoren Alkalimetallkationen, Ammonium oder protonierte substituierte Amine, wie die des Trimethylamins oder Triethanolamins, sein. Normalerweise sind Ammonium-, Natrium- und Kaliumionen bevorzugt.

Beispielhafte, jedoch nicht darauf beschränkte, kationische Emulgatoren sind: Salze von primären, sekundären und tertiären Fettaminen mit 8 bis 24 Kohlenstoffatomen mit Essigsäure, Schwefelsäure, Chlorwasserstoff und Phosphorsäuren. Quarternäre Alkyl- und Alkylphenylammoniumsalze, insbesondere jene, die 6 bis 24 Kohlenstoffatome besitzen, speziell deren Halogenide, Sulfate, Phosphate und Acetate. Alkylpyridinium-, Alkylimidazolinium- und Alkyloxazoliniumsalze, insbesondere diejenigen mit einer Alkylkette von bis zu 18 Kohlenstoffatomen, speziell deren Halogenide, Sulfate, Phosphate und Acetate.

Als amphotere Emulgatoren bieten sich an: Aminosäuren mit langkettigen Substituenten, wie z.B. N-Alkyldi(aminoethyl)glycin- oder N-alkyl-2-aminopropionsäurealze. Betaine, wie z.B. N-(3-acylamidopropyl)-N,N-dimethylammomiumsalze mit einem Acylradikal mit 8 bis 20 Kohlenstoffatomen. Beispielhafte, jedoch nicht darauf beschränkte, nichtionogene Emulgatoren sind: Polyoxyethylenkondensate von Fettsäuren oder Fettalkoholen mit 8 bis 22 Kohlenstoffatomen mit bis zu 95 Gew.-% Oxyethylengehalt bezogen auf die Molmasse des Emulgators; Polyoxyethylenderivate von Phenolen mit 6 bis 20 Kohlenstoffatomen am Aromaten und bis zu 95 Prozent Oxyethylengehalt; Oxyethylenkondensate von Fettsäuremonoestern des Glycerins mit 10 bis 22 Kohlenstoffatomen und bis zu 95 Prozent Oxyethylen; Sorbitanester von Fettsäuren mit 10 bis 22 Kohlenstoffatomen; Polyoxyethylensorbitanester von Fettsäuren mit 10 bis 22 Kohlenstoffatomen; ethoxylierte Amide, exthoxylierte Amine, alkoxylierte Polysiloxane, Blockcopolymere von Propylen-, Ethylenoxid und/oder anderen Epoxiden.

Die obengenannten Fettstrukturen stellen üblicherweise den lipophilen Teil der Emulgatoren dar. Eine übliche Fettgruppe ist eine Alkylgruppe natürlichen oder synthetischen Ursprungs. Bekannte ungesättigte Gruppen sind die Oleyl-, Linoleyl-, Decenyl-, Hexadecenyl- und Dodecenylreste. Bekannte gesättigte Gruppen sind Lauryl-, Stearyl-, Myristyl-, Palmitylreste. Alkylgruppen können dabei cyclisch, linear oder verzweigt sein.

Beim Emulgieren kann ein Emulgator oder eine Mischung mehrerer unterschiedlicher Emulgatoren eingesetzt werden, wobei bevorzugt mindestens ein nichtionogener Emulgator, wie z.B. ethoxylierte Fettsäuren, ethoxylierte lineare oder verzweigte Fettalkohole, Sorbitanfettsäureester oder ethoxylierte Sorbitanfettsäureester enthalten sein sollten.

Weiterhin können als Verdicker bekannte Verbindungen, wie Polyacrylsäure, Polyacrylate, Celluloseether, wie Carboxymethylcellulose und Hydroxyethylcellulose, natürliche Gume, wie Xanthan Gum, und Polyurethane sowie Konservierungsmittel und andere übliche und dem Fachmann bekannte Zusätze den Emulsionen zugesetzt werden.

Im erfindungsgemäßen Verfahren können die Partikel in einem einstufigen oder zweistufigen Verfahren Oberflächenbehandelt werden. Im zweistufigen Verfahren werden die Primärpartikel in der ersten Stufe mit dem Polyether modifizierten Siloxane der Formel(I) gemischt.

Die erste Stufe wird bevorzugt bei Raumtemperatur oder Temperaturen bis zu 60°C durchgeführt.

In der zweiten Stufe werden die Partikel der ersten Stufe vermahlen. Bevorzugte Mühlen sind Dampfstrahlmühlen, Stiftmühlen, Luftstrahlmühlen, Walzenmühlen oder Kugelrohrmühlen.

Die Vermahlung kann bei Normaldruck erfolgen oder bei erhöhtem Druck bis zu 20 bar, bevorzugt bis zu 19 bar, 18 bar, 17 bar, 16 bar, 15 bar, 14 bar, 13 bar, 12 bar, 11 bar, 10 bar, 9 bar, 8 bar, 7 bar, 6 bar, 5 bar, 4 bar, 3 bar oder bis zu 2 bar.

Ein weitere Gegenstand der vorliegenden Erfindung ist die Verwendung der verfahrensgemäßen Partikel zur Herstellung von Polymerzusammensetzungen.

Die der Erfindung zugrunde liegenden Polyether modifizierten Siloxane können durch edelmetallkatalysierte Hydrosilylierung der linearen oder verzweigten Wasserstoffsiloxane der Formel (II)

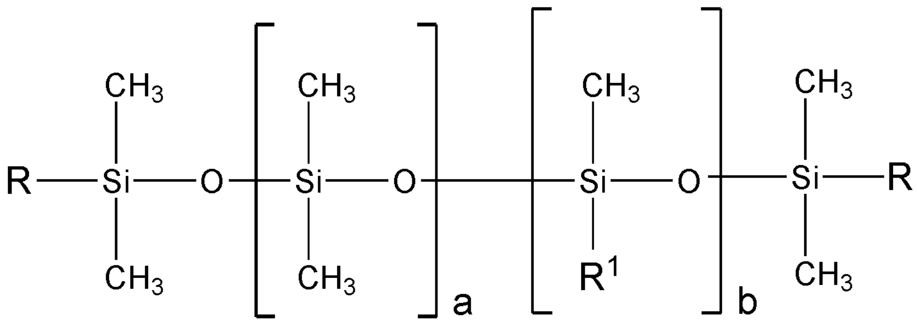

(II)

R gleich oder verschieden $R^1$, Methyl oder Hydroxy

$R^1$ gleich Wasserstoff

mit den oben genannten Definitionen der Reste und Indizes,
mit terminal ungesättigten Polyethern, wie beispielsweise in der EP1520870 beschrieben, hergestellt werden.

Die zu hydrosilylierenden Polyether genügen der Formel (IIIa)

$$Y\text{-}(O\text{-}C_mH_{2m-(n-1)})_o\text{-}[O\text{-}((AO)\text{-}R^{3]}]_n \qquad \text{(IIIa)}$$

mit den obigen Definitionen und Bevorzugungen der Reste und Indices,
wobei der Rest Y terminal ungesättigt ist, bevorzugt mit einer C=C-Doppelbindung, weiter bevorzugt in Bezug auf den Sauerstoff allylisch ungesättigt, insbesondere ein Allylether.

In einer besonderen Ausführungsform können für die Darstellung der Polyether Startalkohole verwendet werden, die zu verzweigten Polyethern führen, die dann zwei oder mehr Oxyalkylenketten aufweisen. Startalkohole wären, Trimethylolpropanmonoallylether oder die Glycerinmonoallylether. Erfindungsgemäß bevorzugt sind Glycerinmonoallylether, insbesondere der terminal allylisch substituierte Glycerinmonoallylether.

Die bei der Herstellung der Polyether modifizierten Siloxane verwendeten Wasserstoffsiloxane können wie im Stand der Technik, beispielsweise in der EP1439200 beschrieben, hergestellt werden. Die verwendeten ungesättigten Polyether können ausgehend von ungesättigten Startalkoholen nach den literaturbekannten Verfahren der alkalischen Alkoxylierung oder unter Verwendung von DMC-Katalysatoren wie im Stand der Technik hergestellt werden, wie beispielsweise in der DE102007057145 beschrieben.

Die erfindungsgemäßen Zusammensetzungen, die erfindungsgemäßen Verwendungen enthaltend die erfindungsgemäßen Zusammensetzungen und / oder die erfindungsgemäßen Partikel und weiterhin das erfindungsgemäße Verfahren zur Herstellung der Partikel werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben auf die Gesamtzusammensetzung. Werden nachfolgend Mittelwerte angegeben, so handelt es sich, wenn nicht anders angegeben, um Massenmittel (Gewichtsmittel). Werden nachfolgend Messwerte angegeben, so wurden diese Messwerte, wenn nicht anders angegeben, bei einem Druck von 101325 Pa und einer Temperatur von 25 °C ermittelt.

Beispiele:

*Allgemeine Methoden und Materialien:*

Viskosität:

Die Bestimmung der Viskositäten erfolgte mittels eines Spindelviskosimeter Typ Brookfield LV-DV-I+. Brookfield-Viskosimeter sind Rotationsviskosimeter mit definierten Spindelsätzen als Rotationskörper. Bei den verwendeten Rotationskörpern handelte es sich um einen LV-Spindelsatz. Aufgrund der Temperaturabhängigkeit der Viskosität wurden die Temperaturen von Viskosimeter und Messflüssigkeit während der Messung auf +/- 0,5 °C genau konstant gehalten. Weitere verwendete Materialien neben dem LV-Spindelsatz waren ein thermostatisierbares Wasserbad, ein Thermometer 0 bis 100°C und ein Zeitmessgerät (Skalenwerte nicht größer als 0,1 Sekunden). Zur Messung wurden 100 ml der Probe in eine Weithalsflasche gefüllt; temperiert und luftblasenfrei vermessen, nachdem eine vorherige Kalibrierung erfolgt war. Zur Bestimmung der Viskosität wurde das Viskosimeter so zur Probe positioniert, dass die Spindel bis zur Markierung im Produkt eintaucht. Die Messung wird mit Hilfe der Starttaste ausgelöst, wobei darauf geachtet wurde, dass die Messung im günstigen Messbereich von 50% (+/- 20%) des maximal messbaren Drehmoments erfolgte, andernfalls musste eine passende Spindel verwendet werden. Das Ergebnis der Messung wurde am Display des Viskosimeters in mPas ausgegeben, wobei die Division durch die Dichte (g/ml) die Viskosität in der Einheit [$mm^2/s$] liefert.

Prüfung der Kornfeinheit:

a) mit Grindometer

Die Bestimmung wird nach DIN EN 21524 (entsprechend ISO 1525) durchgeführt. 3 g der hergestellten Weißpasten gemäß Beispiel 5 (Z2) wurden in einem Kunststoffbecher mit der gleichen Menge DOP mit dem Spatel gut verrührt. Zur Bestimmung der Feinheit wurde die verdünnte Paste auf dem Hegmankeil (Grindometer) zunächst auf dem Hegmannkeil 0 bis 100 µm aufgezogen und dann die entsprechend feinen Proben auf dem Hegmannkeil 0 bis 25 µm (Fa. Erichsen) aufgezogen. Die visuell ermittelten Feinheitswerte in µm wurden notiert

b) mit Druckfiltertest

Die Bestimmung des Druckfilterwertes erfolgte mit dem Einschneckenextruder Brabender Plasti-Corder LAB Station (Schneckendurchmesser/-länge: 30 mm/25D). Es wurden unterschiedliche Siebpakete der Fa. GKD (PZ-Microdur 10 (Filterfeinheit 9 µm) und ein Stützgewebe mit 315 µm Maschenweite eingesetzt. Der Extruder wurde auf eine Temperatur von 200 °C aufgeheizt. Die Temperatur des Filterequipments wurde auf 230 °C eingestellt. Nach gründlichem Spülen des Extruders mit LDPE wurde die Filteraufnahme mit dem Siebpaket eingebaut. Nach Aufgabe des zu prüfenden Masterbatchgranulates und Austritt des pigmentierten Materials am Bypass, wurde der Schmelzestrom über das Siebpaket geleitet und die rechner-gestützte Messdatenerfassung gestartet. Die Messdaten wurden bis zum Erreichen eines maximalen Druckes von 150 bar oder aber bei geringem Druckanstieg bis zu einer Dauer von 60 Minuten registriert. Der Durchsatz lag bei 40 g/min.

Flammschutzprüfung:

Zur Bestimmung der Flammwidrigkeit von Kunststoffzubereitungen werden Prüfkörper mit einer Dicke von 4 mm durch Spritzguß hergestellt. Die Bestimmung der Brandklasse erfolgt nach UL 94 (Unterwriter Laboratories). Folgende Brandklassen sind definiert:

V-0: kein Nachbrennen länger als 10 Sec., bei 10 Beflammungen ist die Summe der Nachbrennzeiten nicht größer als 50 Sec., kein brennendes Abtropfen, die Probe brennt nicht vollständig ab, nach Beflammungsende glüht die Probe nicht länger als 30 Sek.
V-1: nach Beflammungsende glüht die Probe nicht länger als 60 Sek., bei 10 Beflammungen ist die Summe der Nachbrennzeiten nicht größer als 250 Sec., übrige Kriterien wie bei V-0
V-2: Durch brennendes Abtropfen entzündet sich die Watte, übrige Kriterien wie V-1. Nicht klassifizierbar (nkl): erfüllt nicht die Brandklasse V-2.

Spektroskopische Analysen:

Die Aufnahme und Interpretation der NMR-Spektren ist dem Fachmann bekannt. Als Referenz sei das Buch "NMR Spectra of Polymers and Polymer Additives", A. Brandolini und D. Hills, 2000, Marcel Dekker, Inc. angeführt. Die Spektren wurden mit einem Bruker Spectrospin Spektrometer bei Raumtemperatur aufgenommen, die Messfrequenz betrug bei der Aufnahme der Protonenspektren 399,9 MHz, bei Aufnahme der $^{13}C$ Spektren 100,6 MHz bzw. bei Aufnahme der $^{29}Si$ Spektren 79,5 MHz.

Bestimmung der Molmassen, insbesondere der gewichtsmittleren Molmassen Mw:

Die gelpermeationschromatographischen Analysen (GPC) erfolgten mit einem Gerät Typ 1100 der Firma Hewlett-Packard unter Verwendung einer SDV-Säulenkombination (1000/10000 Å, je 65cm, Innendurchmesser 0,8 cm, Temperatur 30°C), THF als mobiler Phase mit einer Flussrate von 1 ml/min und einem RI-Detektor (Hewlett-Packard). Die Kalibrierung des Systems erfolgte gegen einen Polystyrolstandard im Bereich von 162 bis 2.520.000 g/mol.

Bestimmung des SiH-Gehaltes:

Die Bestimmungen der SiH-Werte der eingesetzten Wasserstoffsiloxane aber auch die der Reaktionsmatrices erfolgen jeweils gasvolumetrisch durch die Natriumbutylat induzierte Zersetzung aliquot eingewogener Probemengen an einer Gasbürette. Eingesetzt in die allgemeine Gasgleichung gestatten die gemessenen Wasserstoffvolumina die Gehaltsbestimmung aktiver SiH-Funktionen in den Edukten aber auch in den Reaktionsansätzen und erlauben so die Umsatzkontrolle. Eingesetzt wurde eine 5 Gew.-% Natriumbutylatlösung.

In den folgenden Beispielen bedeutet TP 6875 TEGOPREN® 6875, Warenzeichen der Evonik Industries AG, Essen.

*Beispiel 1: Synthese*

Die eingesetzten Polyether (Tabelle 1, PE) weisen an den Kettenenden jeweils eine Allylether- (PE1 - PE8) oder Vinyletherfunktion (PE9) und eine Hydroxygruppe (PE1 - PE9) auf und sind gekennzeichnet durch unterschiedliche Oxyethylen-, Oxypropylen- und Oxybutylen-Massenanteile (EO/PO/BO-Massenanteile, bezogen auf den Polyetherteil ohne Allyl-/Vinylgruppe) und Molmassen (Mw). Der Vinylpolyether PE9 weist einen Oxybutylenrest als Fragment mit dem Index o gemäß Formel (III) auf, in diesem Fall gleich $-O-(CH_2)_4-$.
Glycerinmonoallylether, der in dem Polyether PE10 und Trimethylolpropanmonoallylether, der in dem Polyether PE11 eingesetzt wurde.

Tabelle #1: Zusammensetzung der eingesetzten Polyether

| Polyether | PO, [Gew.%] | EO, [Gew.%] | BO, [Gew.%] | Mw [g/mol] |
|---|---|---|---|---|
| PE1 | 77 | 23 | | 1057 |
| PE2 | 80 | 20 | | 518 |
| PE3 | 100 | 0 | | 414 |
| PE4 | 68 | 32 | | 1417 |
| PE5 | 88 | 12 | | 1336 |
| PE6 | 72 | 28 | | 1219 |
| PE7 | 90 | 10 | | 1180 |
| PE8 | 80 | 10 | 10 | 1194 |
| PE9 | 83 | 10 | 7 | 1194 |
| PE10 | 90 | 10 | | 1248 |
| PE11 | 90 | 10 | | 1298 |

Die eingesetzten Wasserstoffsiloxane (Tabelle #2, SH) sind gekennzeichnet durch unterschiedliche SiH-Gehalte und Viskositäten.

Tabelle #2: Eigenschaften der eingesetzten Wasserstoffsiloxane

| Wasserstoffsiloxan | SiH-Gehalt, [mmol/g] | Viskosität, 25°C, [mPa*s] |
|---|---|---|
| SH1 | 2,29 | 116 |
| SH2 | 0,90 | 159 |
| SH3 | 1,40 | 61 |
| SH4 | 3,52 | 101 |

Die Polyether modifizierten Siloxane (Tabelle #3, O) wurden mittels Hydrosilylierung nach folgendem Verfahren hergestellt.

In einem 500-ml-Vierhalskolben mit angeschlossenem KPG-Rührer, Rückflusskühler und Innenthermometer wurden das eingesetzte Wasserstoffsiloxan SH und der eingesetzte hydroxyfunktionelle terminal ungesättigte PE im Verhältnis von 1,35 mol Allylpolyether pro Moläquivalent SiH vorgelegt und unter Rühren auf 70°C erhitzt. Es wurden 5 ppm Platin in Form des $Pt_2$(divinyltetramethyl-disiloxan)$_3$-Komplexes (Karstedt-Katalysator, 1,5% Pt in Deca-methylcyclopentasiloxan) mit einer Spritze hinzugegeben. Der gasvolumetrisch bestimmte Umsatz war innerhalb von 1 bis 3 Stunden Nachreaktionszeit bei 70-80°C quantitativ. Nach Filtration erhielt man gelbbräunliche, klare, viskose Flüssigkeiten.

Tabelle #3: Siloxane hergestellt nach Beispiel 1, die in O13 angeführte Mischung ist eine eqimolare Mischung der aufgeführten Polyether

| Beispiel | Wasserstoffsiloxan | Polyether |
|---|---|---|
| O1 | SH2 | PE1 |
| O2 | SH2 | PE5 |
| O3 | SH1 | PE1 |
| O4 | SH2 | PE3 |
| O5 | SH2 | PE6 |
| O6 | SH3 | PE1 |
| O7 | SH4 | PE2 |
| O8 | SH1 | PE2 |
| O9 | SH4 | PE3 |
| O10 | SH4 | PE1 |
| O11 | SH2 | PE4 |
| O12 | SH2 | PE7 |
| O13 | SH4 | PE1 + PE5 |
| O14 | SH2 | PE8 |
| O15 | SH2 | PE9 |
| O16 | SH2 | PE10 |
| O17 | SH2 | PE11 |

*Beispiel 2: Emulsionen*

In eine Emulgatorlösung aus 40 g einer ethoxylierten Stearinsäure mit einem HLB-Wert von ca. 18,8 und 60 g demineralisiertem Wasser wurden unter Scherung (Mizerscheibe, 2000 U/min) innerhalb von 20 Minuten 185 g O12 unter Kühlung zugegeben. Anschließend wurde noch 20 Minuten weiter geschert. Es entstand eine Paste mit erhöhter Viskosität. Danach wurden unter Scherung innerhalb von 10 Minuten 214 g demineralisiertes Wasser zugegeben. Man erhielt eine weiße Emulsion mit einem Festkörperanteil von ca. 45 Gew.-%. Zur Konservierung der Emulsion wurden am Ende 0,15 % einer wässrigen Lösung von 20 Gew.-% Methylisothiazolinon (MIT) zugegeben.

*Beispiel 3: Oberflächenbehandlung von Partikeln*

V1: Behandlung von anorganischen Pigmenten in Trocken-Phase

Es wurden 495 g der Partikel in einen Henschel-Mischer gegeben und dann jeweils 5 g der Oberflächenbehandlungsmittel (gemäß Tabelle #3: O1 bis O17, sowie Oberflächenbehandlungsmittel des Standes der Technik) zugegeben. Dazu wurde für 15 Minuten der Mischer mit einer Geschwindigkeit von 900 Upm betrieben, wobei es zu einer Erwärmung auf bis zu 70 °C kommen kann.
Eisenoxid: Partikel P-FO-1 bis P-FO-17
Kalziumcarbonat: Partikel P-KC-1 bis P-KC-17
Talk, Partikel P-T-1 bis P-T-17
ATH, Paritkel P-ATH-1 bis P-ATH-17
MDH, Partikel P-MDHT-1 bis P-MDHT-17
Weiterhin wurden Vergleichspartikel hergestellt mit Hilfe von Oberflächenbehandlungsmitteln des Standes der Technik hergestellt:

| Oberflächenbehandlungsmittel | Kalziumcarbonat | Talk | ATH | MDH |
|---|---|---|---|---|
| Ohne | P-KC-18 | P-T-18 | P-ATH-18 | P-MDHT-18 |
| TP 6875 | P-KC-19 | P-T-19 | P-ATH-19 | |
| Siliconöl 1000 | P-KC-20 | P-T-20 | P-ATH-20 | |

V2: Behandlung von anorganischen Pigmenten in Nass-Phase

Die Menge an Nachbehandlungsmittel ist auf den Feststoffgehalt der Dispersion des Pigmentes, Flammschutzmittels, Füllstoffes bezogen. Die angegebenen Mengenverhältnisse beziehen sich in der Nassbehandlung auf den Feststoffgehalt an Verbindungen der Formel (I) in den Slurries.

*Beispiel 4: Herstellung von Compounds enthaltend oberflächenmodifizierte Partikel, welche gemäß oder analog Beispiel 3 hergestellt wurden*

Mit einem Leistritz-Extruder 27 mm (Zweischneckenextruder der Firma Leistritz) wurden mit 200 Upm die folgenden Füllstoffcompoundsrezepturen hergestellt:

| Zutaten | Masse [g] |
|---|---|
| Polypropylen, MFI 21 | 76,84 |
| oberflächenbehandelte Partikel | 20 |
| Irganox PS 802 | 0,6 |
| Irganox 1010 | 0,2 |
| Uvinul 4050 | 0,13 |
| Uvinul 5050 | 0,13 |
| Calciumstearat | 0,1 |
| Rußmasterbatch | 2 |

Es resultieren die erfindungsgemäßen Zusammensetzungen Z-T-1 bis Z-T-17.
Es resultieren die erfindungsgemäßen Zusammensetzungen Z-FO-1 bis Z-FO-17 (Eisenoxid), die nicht erfindungsgemäßen Zusammensetzungen Z-FO-18 (ohne Oberflächenbehandlung) bis Z-FO-20 (enthaltend die Vergleichspartikel P-FO-19 bis P-FO-20).
Auf gleiche Art und Weise werden Flammschutzcompounds enthaltend oberflächenbehandelte ATH-Partikel hergestellt mit der Rezeptur:

| Zutaten | Masse [g] |
|---|---|
| Escorene UL 0328 | 25,73 |
| Exxon LL 1004 YP | 12,67 |
| oberflächenbehandelte Partikel | 61,4 |
| Irganox 1010 | 0,2 |

Es resultieren die erfindungsgemäßen Zusammensetzungen Z-ATH-1 bis Z-ATH-17 (ATH), die nicht erfindungsgemäßen Zusammensetzungen Z-ATH-18 bis Z-ATH-20 (enthaltend die Vergleichspartikel P-ATH-18 bis P-ATH-20).

Auf gleiche Art und Weise werden Flammschutzcompounds enthaltend oberflächenbehandelte MDH-Partikel hergestellt mit der Rezeptur:

| Zutaten | Masse [g] |
|---|---|
| Escorene UL 00328 | 23,05 |
| Exxon LLDPE 1004 YP | 11,35 |
| oberflächenbehandelte Partikel | 61,4 |
| Fusabond MB226 | 4 |
| Irganox 1010 | 0,2 |

Es resultieren die erfindungsgemäßen Zusammensetzungen Z-MDH-1 bis 17 (MDH), die nicht erfindungsgemäßen Zusammensetzungen Z-MDH-23 bis Z-MDH-28 (enthaltend die Vergleichspartikel P-MDH-23 bis P-MDH-28).

*Beispiel 5: Prüfung der Eigenschaften der Partikel nach Beispiel 3 (Bestimmung der Schüttdichte):*

Zur Bestimmung der Schüttdichte wurden Probenmengen von 15 g oder 30 g bei Raumtemperatur in einen 100 ml Messzylinder gegeben. Nach 10 min wurden die Volumina abgelesen. Die Schüttdichte errechnet sich als Quotient der Probenmenge und des bestimmten Volumens.

In der folgenden Tabelle bedeuten die "*" T für Talkum, ATH und MDH; also sind die drei ersten Partikel P-T-1, P-ATH-1 und P-MDH-1.

| Partikel | Schüttdichte Talk (T) [g/ml] | Schüttdichte ATH [g/ml] | Schüttdichte MDH [g/ml] |
|---|---|---|---|
| P-*-1 | 0,218 | 0,442 | 0,45 |
| P-*-2 | 0,217 | 0,431 | 0,47 |
| P-*-3 | 0,219 | 0,432 | 0,46 |
| P-*-4 | 0,220 | 0,436 | 0,42 |
| P-*-5 | 0,216 | 0,432 | 0,44 |
| P-*-6 | 0,220 | 0,439 | 0,43 |
| P-*-7 | 0,219 | 0,440 | 0,45 |
| P-*-8 | 0,218 | 0,439 | 0,44 |
| P-*-9 | 0,217 | 0,438 | 0,43 |
| P-*-10 | 0,220 | 0,441 | 0,42 |
| P-*-11 | 0,220 | 0,440 | 0,45 |
| P-*-12 | 0,219 | 0,442 | 0,46 |
| P-*-13 | 0,218 | 0,438 | 0,43 |
| P-*-14 | 0,217 | 0,439 | 0,45 |
| P-*-15 | 0,219 | 0,441 | 0,44 |
| P-*-16 | 0,218 | 0,438 | 0,44 |
| P-*-17 | 0,220 | 0,435 | 0,45 |
| P-*-18 (ohne) | 0,214 | 0,429 | 0,41 |
| P-*-19 (TP 6875) | 0,214 | 0,427 | 0,42 |
| P-*-20 (Siliconöl 1000) | 0,200 | 0,411 | 0,39 |

Beispiel 6A: Zugfestigkeit, Bruchdehnung und Schlagzähigkeit

Um die mechanischen Eigenschaften der Füllstoffcompounds beurteilen zu können werden Schulterstäbe durch Spritzguß (Firma Engel Deutschland) hergestellt. Es wurden Zugstäbe Typ 1A wie in DIN ISO 527-2 beschrieben hergestellt.

Die Zugfestigkeit erfolgte mittels Zugprüfgerät der Fa. Zwick (23°C, 50% rel. Luftfeuchtigkeit). Die Maschinenparameter waren Vorkraft = 20 N, Geschwindigkeit bis Vorkraft = 1 mm/min, Prüfgeschwindigkeit = 5 mm/min, Einspannlänge = 120 mm und Messlänge des Incrementalen Aufnehmers = 80 mm, Dicke des Prüfkörpers 4 mm entsprechend dem Zugstab Typ 1A verwendet.

Schlagzähigkeit (Charpy):

Die Prüfungen wurde mit eine 5 J Schlagpendel nach ISO 179 durchgeführt.

Ergebnisse der mechanischen Prüfungen Z-T-18 und Z-ATH-18 sind Probenkörper, deren Partikel nicht nachbehandelt wurden.

| Probekörper | Zugfestigkeit $\sigma_M$ [MPa] | Bruchdehnung $\varepsilon$tB [%] | Schlagzähigkeit [kJ/m$^2$] |
|---|---|---|---|
| Z-T-1 | 26,3 | 25 | 6,05 |
| Z-T-2 | 26,5 | 28 | 6,32 |
| Z-T-3 | 26,6 | 29 | 5,94 |
| Z-T-4 | 26,4 | 26 | 5,99 |
| Z-T-5 | 26,5 | 18 | 6,05 |
| Z-T-6 | 26,7 | 19 | 6,09 |
| Z-T-7 | 27,0 | 23 | 6,32 |
| Z-T-8 | 26,8 | 22 | 6,51 |
| Z-T-9 | 26,9 | 24 | 6,09 |
| Z-T-10 | 26,8 | 18 | 6,26 |
| Z-T-11 | 26,9 | 19 | 6,39 |
| Z-T-12 | 27,2 | 22 | 6,58 |
| Z-T-13 | 27,2 | 26 | 5,99 |
| Z-T-14 | 27,0 | 23 | 5,95 |
| Z-T-15 | 26,6 | 25 | 5,99 |
| Z-T-16 | 26,4 | 21 | 6,28 |
| Z-T-17 | 26,9 | 20 | 6,42 |
| Z-T-18 | 26,2 | 15 | 5,81 |

| Beispiel ATH | Zugfestigkeit $\sigma_M$ [MPa] | Bruchdehnung $\varepsilon$tB [%] |
|---|---|---|
| Z-ATH-1 | 11,8 | 67 |
| Z-ATH-2 | 10,9 | 73 |
| Z-ATH-3 | 10,4 | 85 |
| Z-ATH-4 | 10,9 | 110 |
| Z-ATH-5 | 10,8 | 91 |
| Z-ATH-6 | 11,2 | 78 |
| Z-ATH-7 | 10,7 | 90 |
| Z-ATH-8 | 11,3 | 72 |
| Z-ATH-9 | 11,1 | 71 |
| Z-ATH-10 | 11,7 | 84 |
| Z-ATH-11 | 11,0 | 85 |
| Z-ATH-12 | 11,9 | 103 |
| Z-ATH-13 | 11,5 | 108 |
| Z-ATH-14 | 10,7 | 101 |
| Z-ATH-15 | 10,9 | 81 |
| Z-ATH-16 | 10,6 | 76 |
| Z-ATH-17 | 11,5 | 71 |
| Z-ATH-18 | 10,2 | 58 |

Zusammensetzungen enthaltend oberflächenbehandelte MDH-Partikel

Um die mechanischen Eigenschaften der Füllstoffcompounds beurteilen zu können wurden mittels Einschneckenextruder Brabender Plasti-Corder LAB Station (Schneckendurchmesser/-länge: 30 mm/25D) Compoundbänder mit 1,7mm Dicke kontinuierlich hergestellt aus den zuvor gemäß der obigen Beschreibung gefertigten Compounds mittles

Doppelschneckenextruder und Schulterstäbe mit einem Werkzeug ausgestanzt aus diesen Compoundbändern, die nach DIN ISO 527-2 Typ 5A Stäbe ergeben.

Die Zugfestigkeit erfolgte mittels Zugprüfgerät der Fa. Zwick (23°C, 50% rel. Luftfeuchtigkeit). Die Maschinenparameter waren Vorkraft = 20 N, Geschwindigkeit bis Vorkraft = 1 mm/min, Prüfgeschwindigkeit = 5 mm/min, Einspannlänge = 120 mm und Messlänge des Incrementalen Aufnehmers = 80 mm.

Die Brandklassen wurden in einer Brennkammer nach UL 94 geprüft. Z-MDHT-18: Die MDH waren nicht oberflächenbehandelt.

| Beispiel MDH | Zugfestigkeit $\sigma_M$ [MPa | Bruchdehnung $\varepsilon$tB [%] |
|---|---|---|
| Z-MDHT-1 | 12,1 | 220 |
| Z-MDHT-2 | 12,0 | 200 |
| Z-MDHT-3 | 12,3 | 180 |
| Z-MDHT-4 | 12,5 | 190 |
| Z-MDHT-5 | 11,9 | 220 |
| Z-MDHT-6 | 12,0 | 210 |
| Z-MDHT-7 | 12,1 | 200 |
| Z-MDHT-8 | 12,4 | 200 |
| Z-MDHT-9 | 12,3 | 200 |
| Z-MDHT-10 | 12,0 | 220 |
| Z-MDHT-11 | 11,7 | 220 |
| Z-MDHT-12 | 12,2 | 210 |
| Z-MDHT-13 | 12,0 | 210 |
| Z-MDHT-14 | 11,9 | 180 |
| Z-MDHT-15 | 11,9 | 190 |
| Z-MDHT-16 | 12,2 | 210 |
| Z-MDHT-17 | 12,3 | 220 |
| Z-MDHT-18 | 10,8 | 160 |

Beispiel 6B: Brandklasse

Es werden immer 5 Specimen geprüft (Probenkörper), wobei dies auch die zuvor für die Mechanik hergestellten Typ 1A-Stäbe sind.

Specimen mit 59 und 61,4 % werden analog geprüft, so wie in der UL 94 beschrieben. Die Brandklassen wurden in einer Brennkammer nach UL 94 geprüft und es wird die Brandklasse mit der Anzahl der Prüflinge aufgeführt, die V2, V1 oder V0 bestehen oder ggf. mit nicht bestanden aufgeführt, wenn keine der Klassen erreicht wird.

Z-ATH-18 beruht auf einer Zusammensetzung deren ATH-Partikel nicht oberflächenbehandelt waren. Z-ATH-19 beruht auf Zusammensetzungen, deren Partikel mit Silikonöl nach dem Stand der Technik behandelt wurden.

| Beispiel ATH | Brandklasse 59% | 61,4% |
|---|---|---|
| Z-ATH-1 | 5x V0 | 5xV0 |
| Z-ATH-2 | 4xV0, 1xV1 | 5xV0 |
| Z-ATH-3 | 5x V0 | 5xV0 |
| Z-ATH-4 | 4xV0, 1xV1 | 5xV0 |
| Z-ATH-5 | 4xV0, 1xV1 | 5xV0 |
| Z-ATH-6 | 5x V0 | 5xV0 |
| Z-ATH-7 | 5x V0 | 5xV0 |
| Z-ATH-8 | 4xV0, 1xV1 | 5xV0 |
| Z-ATH-9 | 5x V0 | 5xV0 |
| Z-ATH-10 | 5x V0 | 5xV0 |
| Z-ATH-11 | 5x V0 | 5xV0 |
| Z-ATH-12 | 5x V0 | 5xV0 |
| Z-ATH-13 | 4xV0, 1xV1 | 5xV0 |

(fortgesetzt)

| Beispiel ATH | Brandklasse 59% | 61,4% |
|---|---|---|
| Z-ATH-14 | 4xV0, 1xV1 | 5xV0 |
| Z-ATH-15 | 5x V0 | 5xV0 |
| Z-ATH-16 | 5x V0 | 5xV0 |
| Z-ATH-17 | 4xV0, 1xV1 | 5xV0 |
| Z-ATH-18 | nicht bestanden | 2xV0, 3xV1 |
| Z-ATH-19 | nicht bestanden | 2xV2, 3xV1 |

Den Ergebnissen ist zu entnehmen, dass die Brandklasse V-0 erreicht wird, obwohl ein niedrigerer Gehalt an Brandschutzmittel (ATH) im Compound enthalten ist.

Beispiel 6C: MFI (Melt Flow Index) und Wasseraufnahme der trocken nachbehandelten MDH-Partikel (Flammschutzcompound)

Für die Bestimmung der Wasseraufnahme wurden hier die beschriebenen Zugstäbe gespritzt, die Typ 1A entsprechen also nicht die extrudierten Bändchen resultierend in dem ausgestanzten Typ 5A verwandt. Die Prüflinge werden im Ofen für 14 Tage bei 80°C gelagert und dann die Gewichtszunahme in % angegeben.

Die Prüfung des MFI erfolgt mittels DIN EN ISO 1133 mit dem Gerät Meltfixer der Firma SWO Polymertechnik GmbH.

Z-MDHT-18 beruht auf einer Zusammensetzung, deren Partikel nicht oberflächenbehandelt wurden.

| Beispiel MDH | MFI bei 190°C/21,6kg | Wasseraufnahme in % |
|---|---|---|
| Z-MDHT-1 | 7.58 | 0,34 |
| Z-MDHT-2 | 8,31 | 0,38 |
| Z-MDHT-3 | 8,02 | 0,33 |
| Z-MDHT-4 | 7,79 | 0,38 |
| Z-MDHT-5 | 7,91 | 0,40 |
| Z-MDHT-6 | 8,31 | 0,29 |
| Z-MDHT-7 | 8,09 | 0,31 |
| Z-MDHT-8 | 7,88 | 0,36 |
| Z-MDHT-9 | 7,81 | 0,29 |
| Z-MDHT-10 | 8,54 | 0,28 |
| Z-MDHT-11 | 9,01 | 0,29 |
| Z-MDHT-12 | 8,87 | 0,26 |
| Z-MDHT-13 | 7,69 | 0,26 |
| Z-MDHT-14 | 7,42 | 0,28 |
| Z-MDHT-15 | 7,92 | 0,27 |
| Z-MDHT-16 | 8,03 | 0,34 |
| Z-MDHT-17 | 7,56 | 0,39 |
| Z-MDHT-18 | 6,72 | 0,55 |

Den Werten ist zu entnehmen, dass durch die Oberflächenbehandlung der Partikel die Wasseraufnahme der erfindungsgemäßen Zusammensetzungen auf unter 0,45% gesunken ist. Die Fließfähigkeit hat relativ zu den Zusammensetzungen basieren auf unbehandelten Partikel um mindestens 5% zugenommen.

V4 Flüssiqpastenmethode:

V4A: Herstellung von Pigmentpasten mit oberflächenmodifizierten Pigmenten

Für die Flüssigpastenherstellung werden Pigmente genutzt, die vorher durch Modifizierung in der Trockenphase mit den Verbindungen der Formel (I) belegt worden sind. Es werden 98g Pigment mit 2g Polyether modifizierten Siloxane nachbehandelt und dazu das vorgenannte Henschelequipment verwendet. Anschließend werden 80 g eines epoxidierten

Sojaöls (z.B. Epoxol D 44, Fa. FACI) mit 20gPigment Blau 15:3, welches mit den erfindungsgemäßen Verbindungen belegt wurde (z.B. Heliogenblau K 7090, Fa. BASF) in eine 250 ml Pulverflasche eingewogen und 5 Min bei 2500 U/Min mit einem H-Trieb mit Dissolverscheibe dispergiert.

Prüfung der Flüssigpasten

3 g der hergestellten Pigmentpaste werden zur Bestimmung der Feinheit auf dem Hegmankeil (Grindometer) 0 - 25 μm (Fa. Erichsen) aufgezogen. Die visuell ermittelten Feinheitswerte in μm wurden notiert.

Eine Feinheit von größer 15 μm zeigt eine mangelhafte Dispergierung.

Bestimmung der Körnigkeit: Z-P-18 ist eine Paste, deren Partikel nicht obeflächenbehandelt wurden, Z-P-19 ist eine Paste, deren Partikel mit Silikonöl nach dem Stand der Technik oberflächenbehandelt wurden.

| Beispiel (Heliogenblau) | Feinheit [μm] |
|---|---|
| Z-P-1 | 13 |
| Z-P-2 | 12 |
| Z-P-3 | 12 |
| Z-P-4 | 12 |
| Z-P-5 | 13 |
| Z-P-6 | 13 |
| Z-P-7 | 12 |
| Z-P-8 | 12 |
| Z-P-9 | 12 |
| Z-P-10 | 12 |
| Z-P-11 | 12 |
| Z-P-12 | 12 |
| Z-P-13 | 13 |
| Z-P-14 | 13 |
| Z-P-15 | 12 |
| Z-P-16 | 13 |
| Z-P-17 | 12 |
| Z-P-18 | 18 |
| Z-P-19 | 25 |

**Zusammensetzungen hergestellt durch Mischung von Polymeren mit Partikeln und Oberflächenbehandlungsmittel in einem Verfahrensschritt**

V5B: Herstellung von Pigmentpasten wo der unmodifizierte Partikel in eine Mischung aus kontinuierlicher Phase und speziellen alkoxylierten Polyethern eindispergiert wird.

Für die Herstellung von Pigmentpasten als Alternative zu festen Pigmentmasterbatchen werden Pigmentpasten nach folgenden Rezepturen hergestellt: Die Verwendung von Additiven der Formel (I) führt zu erfindungsgemäßen Zusammensetzungen.

Die Bestandteile werden zusammen mit 200 g Glasperlen (Durchmesser 2 mm) in eine 250 ml Pulverflasche gegeben und 2 h im Scandex (Fa. Lau GmbH) dispergiert:

| Zutaten | Paste 1 | Paste 2 | Paste 3 | Paste 4 |
|---|---|---|---|---|
| Rapsöl | 78 | 78 | | |
| Diisononylphthalat | | | 78 | 78 |
| Phthalocyaninblau (Heliogenblau K 7090, BASF) | 20 | | 20 | |
| Pigment Rot 57:1 (Irgalite® Rubine K 4270 FP, BASF) | | 20 | | 20 |
| Additiv (Verbindung der Formel (I)) | 2 | 2 | 2 | 2 |

**Thermoplastische Spritzgußteile auf Basis von Polypropylen**

Um das Einfärbevermögen und die Dispergiergüte der in Tabelle #20 aufgeführten Pasten zu bestimmen werden Platten durch Spritzguß (Firma Engel Deutschland) von 6x6x0,2 cm Größe hergestellt. Hierzu werden 400 g Polypropylen (MFI 20) mit 16 g Weißmasterbatch ($TiO_2$ Gehalt= 50%) und 4 g Pigmentpaste im PE Beutel gemischt und das Spritzgußteil farbmetrisch Beurteilt.

**Farbmetrische Beurteilung und Berechung der Farbstärke:**

Von den hergestellten Platten werden mittels Spektralphotometer (SP 68, X-Rite) die farbmetrischen Werte ermittelt. Die Ergebnisse sind in Tabelle #20 als L-a-b-Werte angegeben. Zugleich wird die Farbstärke im Vergleich zu einer Referenzprobe berechnet. Je besser das Pigment in der Phase dispergiert wurde, desto höher ist die Farbstärke im Vergleich zur Referenzprobe. Die Referenzprobe wird per Definition mit 100% festgelegt.

Tabelle #20: Die angegebenen Werte wurden unter Verwendung von Paste 1 bestimmt, ZZ-P-18 beruht auf einer Zusammensetzung, die keine Verbindung der Formel (I) enthielt.

| Beispiel | L* | a* | b* | Farbstärke [%] |
|---|---|---|---|---|
| ZZ-P-1 | 61.76 | | -37,26 | 108 |
| ZZ-P-2 | 61,33 | | -37,21 | 109 |
| ZZ-P-3 | 61,19 | -20,92 | -37,37 | 109 |
| ZZ-P-4 | 60,78 | | -37,10 | 112 |
| ZZ-P-5 | 61,35 | | -37,09 | 109 |
| ZZ-P-6 | 60,60 | | -37,13 | 113 |
| ZZ-P-7 | 60,50 | | -36,92 | 116 |
| ZZ-P-Z8 | 60,34 | -20,69 | -37,13 | 116 |
| ZZ-P-9 | 60,58 | | -36,89 | 115 |
| ZZ-P-10 | 61,75 | | -37,02 | 108 |
| ZZ-P-11 | 61,55 | | -37,18 | 109 |
| ZZ-P-12 | 60,37 | -20,62 | -36,78 | 116 |
| ZZ-P-13 | 60,41 | | -36,95 | 116 |
| ZZ-P-14 | 60,78 | | -37.01 | 112 |
| ZZ-P-15 | 60,87 | | -37,14 | 112 |
| ZZ-P-16 | 61,45 | | -37,42 | 108 |
| ZZ-P-17 | 61,40 | | -37,15 | 109 |
| ZZ-P-18 | 62,45 | -20,82 | -35,83 | 100 |

Wie an den Werten deutlich zu erkennen ist, wird durch die Polyether modifizierten Siloxane gemäß der Beschreibung die Farbstärke um wenigstens 8% erhöht und die bessere Dispergierung wird nicht nur daran deutlich, sondern auch an den reduzierten Helligkeitswerten L*, welche typisch für ein besser dispergiertes Blaupigment sind. Da sich der Rotwert a* kaum ändert und wenig charakteristisch ist, wird er hier nicht für alle Zusammensetzungen mit angegeben und der Blauwert b* wird ebenfalls nur der Vollständigkeit halber aufgeführt.

V5C Herstellung von Pigmentpasten für PU Schaumanwendungen

Die Bestandteile werden zusammen mit 200 g Glasperlen (Durchmesser 2 mm) in eine 250 ml Pulverflasche gegeben und 4 h im Scandex (Fa. Lau GmbH) dispergiert.

Die Pigmentpasten werden nach folgender Rezeptur hergestellt:

| | Paste |
|---|---|
| Polyol (Caradol ED-03) | 70 g |
| Oberflächenbehandelter Ruß (Monarch 800, Cabot) | |
| Ruß (Monarch 800, Cabot) | 20 g |
| Additiv (Verbindung der Formel (I)) | 10 g |

Zur Herstellung der PU Schäume werden folgende Bestandteile gemischt und in einem Kunststoffbecher geschäumt. Nach Ende der Reaktionszeit werden Platten aus diesem Schaum gesägt und die Farbstärke mittels Spektralphotometer (SP 68, X-Rite) berechnet. Als Referenzprobe wird ein Schaum mit einer Paste ohne Additiv der mit 100% Farbstärke definiert wird gewählt.

Herstellung eines PU Schaums zur Beurteilung der Dispergiergüte die anhand der Farbstärkeentwicklung beurteilt wird:

| Zutaten | Masse [g] |
|---|---|
| Polyetherpolyol OHZ: 47 (Varanol CP 3322; Dow) | 100,00 |
| Metalk Katalysator (Kosmos 29, Evonik) | 0,22 |
| Tegostab BF 2370, Evonik | 1,00 |
| Wasser | 5,00 |
| Dimethylethanolamin | 0,15 |
| Tolyldiisocyanat | 58,40 |
| Varonate T-80, Dow | |
| Pigmentpaste | 1,00 |

Die Zusammensetzung Z-R-18 enthielt keine Verbindung der Forme(I), die Zusammensetzung Z-R-19 enthielt Silikonöl.

| Beispiel | Farbstärke [%] |
|---|---|
| Z-R-1 | 108 |
| Z-R-2 | 107 |
| Z-R-3 | 108 |
| Z-R-4 | 111 |
| Z-R-5 | 110 |
| Z-R-6 | 115 |
| Z-R-7 | 110 |
| Z-R-Z8 | 109 |
| Z-R-9 | 108 |
| Z-R-10 | 109 |
| Z-R-11 | 109 |
| Z-R-12 | 112 |
| Z-R-13 | 109 |
| Z-R-Z14 | 112 |
| Z-R-15 | 113 |
| Z-R-16 | 110 |
| Z-R-17 | 109 |
| Z-R-18 | 100 |
| Z-R-19 | 78 |

Die Farbstärke wird um wenigstens 7% erhöht, wohingegen die Verwendung eines hydrophobierenden Siliconöls in der Rußpaste sogar zur deutlichen Verschlechterung der Einfärbbarkeit eines PU-Schaums führt, was man bereits an der hohen Pastenviskosität ersehen kann.

V6: Oberflächenmodifizierung von Flammschutzmittel in der Extrusion/Compoundierung von unmodifizierten Partikeln mit den speziellen alkoxylierten Siloxanen

Mit einem Leistritz-Extruder 27 mm (Zweischneckenextruder der Firma Leistritz) wurde mit 200 Upm die folgende Flammschutzcompoundrezeptur hergestellt gemäß der folgenden Zusammensetzung.

| Zutaten | Masse [g] |
|---|---|
| Escorene UL 00328 | 23,05 |
| Exxon LLDPE 1004 YP | 11,35 |
| Nicht oberflächenbehandelter Partikel(MDH) | 61,4 |
| Fusabond MB226 | 4 |
| Irganox 1010 | 0,2 |
| Additiv (Verbindung der Formel (I)) | 1,0 |

Die Zusammensetzung Z-MDHB-18 beruht auf einer Zusammensetzung der obigen Tabelle ohne Zusatz des Additivs.

| Beispiel MDH | MFI |
|---|---|
| Z-MDHB-1 | 7,96 |
| Z-MDHB-2 | 7,59 |
| Z-MDHB-3 | 7,59 |
| Z-MDHB-4 | 7,85 |
| Z-MDHB-5 | 7,58 |
| Z-MDHB-6 | 7,77 |
| Z-MDHB-7 | 7,95 |
| Z-MDHB-8 | 7,82 |
| Z-MDHB-9 | 7,58 |
| Z-MDHB-10 | 7,99 |
| Z-MDHB-11 | 7,91 |
| Z-MDHB-12 | 7,68 |
| Z-MDHB-13 | 7,54 |
| Z-MDHB-14 | 7,87 |
| Z-MDHB-15 | 8,01 |
| Z-MDHB-16 | 7,55 |
| Z-MDHB-17 | 7,68 |
| Z-MDHB-18 | 6,72 |

V7: Oberflächenbehandlung von Pigmenten in der Masterbatchextrusion als Verfahren, z.B. für die Pigmente

Die Mischungen werden in einem Doppelschneckenextruder der Fa. Leistritz (Modell: Micro 27 GL 40D) bei 200 Upm verarbeitet.

Die Herstellung der Pigmentpräparationen erfolgte durch Vormischen der Einzelkomponenten im Premix gemäß der unten stehenden Formulierung:

| | Masterbatch 1 | Masterbatch 2 |
|---|---|---|
| Polypropylen Homopolymer MFI = 55 (230°C/2.16 kg) (PPH 11012, Total) | 56 g | 56 g |
| Pigment Blau 57:1 (Heliogenblau D 6902, BASF) | 40 g | |
| Pigment Rot 202 (Cromophtal® Magenta P, BASF) | | 40 g |
| Additiv (Verbindung der Formel (I)) | 4 g | 4 g |

**Prüfung der Dispergierbarkeit von oberflächenbehandelten Partikel**

E2: Prüfung der Masterbatches im Druckfiltertest

Die Bestimmung des Druckfilterwertes erfolgte mit dem Einschneckenextruder Brabender Plasti-Corder LAB Station (Schneckendurchmesser/-länge: 30 mm/25D). Es wurde ein Siebpaket der Fa. GKD mit einem PZ-Microdur 10 (Filterfeinheit 9 μm) und einem Stützgewebe mit 315 μm Maschenweite eingesetzt. Der Extruder wurde auf eine Temperatur von 200 °C aufgeheizt. Die Temperatur des Filterequipments wurde auf 230 °C eingestellt. Nach gründlichem Spülen des Extruders mit LDPE wurde die Filteraufnahme mit dem Siebpaket eingebaut. Nach Aufgabe des zu prüfenden Masterbatchgranulates und Austritt des pigmentierten Materials am Bypass, wurde der Schmelzestrom über das Siebpaket geleitet und die rechner-gestützte Messdatenerfassung gestartet. Die Messdaten wurden bis zum Erreichen eines maximalen Druckes von 150 bar oder aber bei geringem Druckanstieg bis zu einer Dauer von 60 Minuten registriert. Der Durchsatz lag bei 40 g/min.

Das Maß für die Dispergierqualität ist der Druckfilterwert (DF), der nach folgender Formel berechnet wird:

$$DF = \frac{(p_{max}-p_0) \times F \times 100}{(t \times K \times G)} \qquad [bar \times cm^2 / g]$$

$p_{max}$: Enddruck [bar]
$p_0$ : Anfangsdruck [bar]
F: Filterfläche = 6,16 $cm^2$
t: Messzeit [min]
K: Konzentration [Gew.-%] Pigment bezogen auf Gesamtzusammensetzung
G Durchsatz [g/min]

Druckfilterwerte des Masterbatch 1 (Heliogenblau, D6911)

| Beispiel | Druckfilterwert |
|---|---|
| Z-HB-1 | 0,99 |
| Z-HB-2 | 1,29 |
| Z-HB-3 | 1,34 |
| Z-HB-4 | 0,89 |
| Z-HB-5 | 1,27 |
| Z-HB-6 | 1,56 |
| Z-HB-7 | 1,49 |
| Z-HB-8 | 1,22 |
| Z-HB-9 | 0,97 |
| Z-HB-10 | 0,89 |
| Z-HB-11 | 1,11 |
| Z-HB-12 | 1,01 |
| Z-HB-13 | 1,43 |
| Z-HB-14 | 1,29 |
| Z-HB-15 | 1,53 |
| Z-HB-16 | 1,33 |
| Z-HB-17 | 1,09 |
| Z-HB-18 | 3,4 |

Je geringer der Druckfilterwert desto besser ist die Dispergierung des Pigmentes im Polymer. Druckfilterwerte$\geq$ 2 bar*$cm^2$/g zeigen eine mangelnde Dispergierfähigkeit an.

**Prüfung der Dispergiergüte durch Bestimmung der Farbstärke im Spritzgußteil**

Um die Dispergiergüte der hergestellten Masterbatche zu beurteilen werden 300 g des oben angegebenen Polypropylens mit 8,6 g eines Weißmasterbatch (70% $TiO_2$ Gehalt) und 3 g des Pigmentmasterbatches gemischt und durch Spritzguß (Firma Engel Deutschland) Platten von 6 cm x 6 cm x 0,2 cm Größe hergestellt und anschließen coloristisch nach dem CIE-Lab-Farbsystem vermessen. Je höher die Farbstärke im Vergleich zu einer Referenzprobe ist, desto besser ist die Verteilung des Pigmentes, bzw. desto geringer ist der Agglomeratanteil in dem zugrundeliegenden Farbmasterbatch. Zum Vergleich wird die Farbstärke der Referenzproben per Definition mit 100% festgelegt. Die Referenzprobe Z-HB2-18 ist ohne Addtiv hergestellt worden.

| Beispiel | Farbstärke [%] |
|---|---|
| Z-HB2-1 | 112 |
| Z-HB2-2 | 118 |
| Z-HB2-3 | 112 |
| Z-HB2-4 | 114 |
| Z-HB2-5 | 110 |
| Z-HB2-6 | 116 |
| Z-HB2-7 | 115 |
| Z-HB2-8 | 118 |
| Z-HB2-9 | 112 |
| Z-HB2-10 | 117 |
| Z-HB2-11 | 123 |
| Z-HB2-12 | 121 |
| Z-HB2-13 | 118 |
| Z-HB2-14 | 110 |
| Z-HB2-15 | 113 |
| Z-HB2-16 | 115 |
| Z-HB2-17 | 110 |
| Z-HB2-18 | 100 |

Aus den Werten der obigen Tabelle ist zu entnehmen, dass sich die Farbstärke durch die Additive der Formel (I) um mindestens 10% erhöht haben.

Prüfung der Masterbatches in Polymer Flachfolien:

Die Masterbatche der obigen Tabelle wurden nach folgendem Verfahren zu Folien extrudiert. Dazu wurden die Masterbatche mit LDPE-Granulat (Polymer PP 11012 Pulver) auf eine Konzentration von 10 Gew.-% Pigment verdünnt. Hierzu wurden Masterbatch und Polymergranulat in einem Kunststofffbeutel gegeben und von Hand 0,5 min geschüttelt. Danach wurde von den Mischungen mittels Einschneckenextruder Brabender Plasti-Corder LAB Station (Schneckendurchmesser/-länge: 30 mm/25D) mit Blasfolienvorrichtung Folien hergestellt. Der Folienstrang wurde über ein Förderband abgezogen, abgekühlt und aufgerollt.

Aus dem Folienstrang wurden 5 etwa 50 cm lange Stücke begutachtet (10cm breit und 150 Micrometer dick). Die Beurteilung erfolgte im Durchlicht hinsichtlich der Anzahl undispergierter Agglomerate. Dabei hatte die Größe der Stippen, welche aus nicht vollständig dispergierten Agglomeraten bestehen, keinen Einfluss auf die Benotung.

Die Ergebnisse wurden in einem fünfstufigen System benotet, wobei Note 1 keine oder max 1 Stippe pro Stück, Note 2 vereinzelte Stippen (2-3 Stippen pro Stück), Note 3 mäßige Anzahl (4-6 Stippen pro Stück), Note 4 viele Stippen, Note 5 sehr viele Stippen (> 10 Stippen). Die 5 beurteilten Stücke werden am Ende zu einer ganzen Zahl zusammengefaßt oder ggf. die Benotung z.B. mit 1.5 angegeben, wenn die Folienstippenanzahl eine Benotung von 1 oder 2 zulassen würde.

| Beispiel | Note |
|---|---|
| Z-F-1 | 1,5 |
| Z-F-2 | 1,5 |
| Z-F-3 | 1,5 |
| Z-F-4 | 1,5 |
| Z-F-5 | 2 |
| Z-F-6 | 2 |
| Z-F-7 | 1,5 |
| Z-F-8 | 2 |
| Z-F-9 | 1,5 |
| Z-F-10 | 2 |
| Z-F-11 | 2 |
| Z-F-12 | 1,5 |

(fortgesetzt)

| Beispiel | Note |
|---|---|
| Z-F-13 | 2 |
| Z-F-14 | 2 |
| Z-F-Z15 | 2 |
| Z-F-16 | 1,5 |
| Z-F-17 | 1,5 |
| Z-F-18 | 5 |

Prüfung in ungesättigten Polyesterharzen gefüllt mit Flammschutzmittel ATH (UPES gemäß Römpp

Entsprechend der nachstehenden Rezeptur werden die Bestandteile im Dissolver gemischt und für 10min mit 3.000 rpm in einem Dispergiertopf, wo die Disperrmatscheibe 2/3 des Durchmessers des Topfes hat, dispergiert

| Zutaten | Funktion | Rezeptur 1 [g] |
|---|---|---|
| Distitron 416B1V12 (Fa. Polynt/Italien) | Polyesterharz | 35,0 |
| Apyral 24 (Fa. Nabaltec AG, Deutschland) | Aluminiumhydroxid | 65,0 |
| Butanox M 50 (Fa. Akzo Nobel) | Härter | 1,0 |
| Accelerator NL 49 P (Fa. Akzo Nobel) | Beschleuniger | 0,3 |
| Additiv Verbindungen der Formel(I) | | 0,5 |

Die resultierenden Mischungen werden in Formen gegossen, um Schulterstäbe nach DIN ISO 527-2 Typ 5A Stäbe zu erhalten.

Die Zugfestigkeit erfolgte mittels Zugprüfgerät der Fa. Zwick (23°C, 50% rel. Luftfeuchtigkeit). Die Maschinenparameter waren Vorkraft = 20 N, Geschwindigkeit bis Vorkraft = 1 mm/min, Prüfgeschwindigkeit = 5 mm/min, Einspannlänge = 55 mm und Messlänge des Incrementalen Aufnehmers = 25 mm.

Darüber hinaus werden 6cm x 6cm große Platten gegossen, mit 2mm Schichtdicke, die dann als Prüfkörper für die Kratzfestigkeit verwendet werden und wo vor und nach Kratzen der Helligkeitswert bestimmt wird, um die Kratzbeständigkeit als delta L-Wert

Die Prüfung der Kratzfestigkeit erfolgt nach GMW 14688 Abschnitt A. Als Prüfgerät wird ein Scratch Hardness Tester 430 P der Firma Erichsen, Hemer verwendet. Eine Prüfplatte mit 6 x 6 cm wird in das Gerät eingespannt. Mit einer Prüfspitze die eine Kugel von 1,0 mm Durchmesser hat werden 40 mm lange Kratzer im Abstand von 2 mm mit einer Geschwindigkeit von 1000 mm/min in die Platte gekratzt. Nach 20 Kratzern wird die Platte um 90° gedreht und es werden wieder 20 Krater gemacht. Das resultierende Gitter dient zu Beurteilung der Kratzfestigkeit.

Zur messtechnischen Beurteilung der Kratzfestigkeit wird die Platte vor dem Einspannen in das Gerät mittels Spectralphotometer (SP 62, X-Rite) farbmetrisch vermessen. Nach der Prüfung erfolgt eine zweite Messung. Es wird jeweils der Helligkeitswert (L*) gemessen und die Differenz der beiden L-Werte als delta-L Wert zur Beurteilung herangezogen.

Je niedriger der resultierende Delta L-Wert desto besser ist die Kratzfestigkeit.

Die Zusammensetzung Z-UPES-18 beruht auf einer Zusammensetzung, die keine Verbindung der Formel (I) enthielt.

| Beispiel UPES-ATH | Kratzfestigkeit Delta L | Zugfestigkeit $\sigma_M$ [MPa] | Bruchdehnung $\varepsilon$tB [%] |
|---|---|---|---|
| Z-UPES-1 | 1,43 | 24,6 | 6,8 |
| Z-UPES-2 | 1,28 | 24,8 | 7,2 |
| Z-UPES-3 | 0,79 | 24,9 | 6,8 |
| Z-UPES-4 | 0,58 | 24,3 | 7,9 |

(fortgesetzt)

| Beispiel UPES-ATH | Kratzfestigkeit Delta L | Zugfestigkeit $\sigma_M$ [MPa] | Bruchdehnung $\varepsilon$tB [%] |
|---|---|---|---|
| Z-UPES-5 | 0,89 | 24,5 | 8,1 |
| Z-UPES-6 | 1,23 | 24,6 | 7,5 |
| Z-UPES-7 | 1,45 | 24,5 | 8,9 |
| Z-UPES-8 | 1,21 | 25,1 | 7,7 |
| Z-UPES-9 | 1,09 | 25,3 | 7,9 |
| Z-UPES-10 | 0,89 | 25,6 | 8,1 |
| Z-UPES-11 | 0,97 | 25,7 | 8,5 |
| Z-UPES-12 | 0,96 | 25,8 | 7,6 |
| Z-UPES-13 | 0,95 | 24,9 | 8,1 |
| Z-UPES-14 | 0,94 | 26,1 | 8,0 |
| Z-UPES-15 | 1,22 | 26,0 | 7,5 |
| Z-UPES-16 | 1,09 | 25,0 | 7,2 |
| Z-UPES-17 | 1,06 | 24,8 | 7,9 |
| Z-UPES-18 (Nullprobe) | 2,08 | 24,1 | 5,1 |

Die Werte zeigen die deutliche Verbesserung der Kratzfestigkeit der erfindungsgemäßen Zusammensetzungen.

## Patentansprüche

1. Polymerzusammensetzungen enthaltend

a) feste Partikel,
b) mindestens ein Polymer, ausgewählt aus Thermoplasten oder Duromeren,
c) mindestens eine Verbindung der Formel (I),

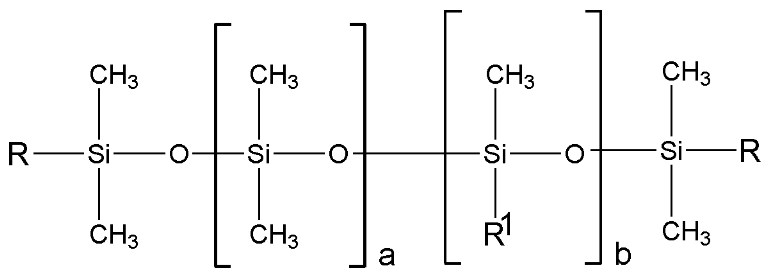

(I)

mit

R gleich oder verschieden $R^1$, Methyl oder Hydroxy,
$R^1$ gleich oder verschieden einem Polyetherrest der Formel (III) ist

$$-Z-(O-C_mH_{2m-(n-1)})_o-[O-(AO)-R^3]_n \quad (III)$$

mit

Z gleich einem verzweigten oder unverzweigten Alkylenrest mit 2 bis 4 Kohlenstoffatomen,
m 2 bis 4,
n 1 bis 3,
o 0 oder 1,
AO gleich oder verschieden einem Oxyalkylenrest enthaltend Oxyethylen-, Oxypropylen- und/oder Oxybu-

tylenreste,
$R^3$ gleich oder verschieden Wasserstoff, ein Alkylrest mit 1 bis 4 Kohlenstoffatomen,
und mit der Maßgabe, dass in $R^1$ die Summe aus Kohlenstoff- und Sauerstoffatomen mindestens 70 ist,
a 20 bis 200,
b 1 bis 50,

mit der Maßgabe, dass wenn keiner der Reste R gleich $R^1$ ist, b mindestens 3 ist,
d) optional weitere Komponenten

**2.** Polymerzusammensetzungen nach Anspruch 1 **dadurch gekennzeichnet, dass**

c) mindestens eine Verbindung der Formel (I),

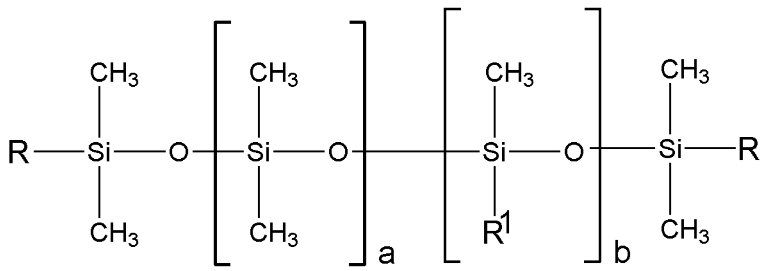

(I)

mit

R gleich Methyl,
$R^1$ gleich oder verschieden einem Polyetherrest der Formel (III) ist

$$-Z-(O-C_mH_{2m-(n-1)})_o-[O-(AO)-R^3]_n \qquad (III)$$

mit

Z gleich einem verzweigten oder unverzweigten Alkylenrest mit 3 Kohlenstoffatomen
m 3
n 1 oder 2, insbesondere bevorzugt 1
o 0
AO gleich oder verschieden einem Oxyalkylenrest enthaltend Oxyethylen-, Oxypropylen- und/oder Oxybutylenreste,
$R^3$ gleich oder verschieden Wasserstoff, ein Alkylrest mit 1 bis 4 Kohlenstoffatomen,
und mit der Maßgabe, dass in $R^1$ die Summe aus Kohlenstoff- und Sauerstoffatomen mindestens 70 ist,
a 20 bis 200, bevorzugt von 30, von 40, von 50, von 60 bis 170, bis 160, bis 150, bis 140, bis 130, bis 120, bis 110 und insbesondere bevorzugt 70 bis 100,
b 1 bis 50, bevorzugt von 2, von 3, von 4 bis 30, bis 25, bis 20 und insbesondere bevorzugt 5 bis 15,

mit der Maßgabe, dass wenn keiner der Reste R gleich $R^1$ ist, b mindestens 3 ist,

**3.** Polymerzusammensetzungen nach einem der Ansprüche 1 oder 2 **dadurch gekennzeichnet, dass**
$R^1$ gleich oder verschieden ein $-(CH_2)_p-O-EO_x-PO_y-BO_z--R^3$,
mit der Maßgabe, dass in $R^1$ die Summe aus Kohlenstoff- und Sauerstoffatomen mindestens 70 ist,
EO Oxyethylen,
PO Oxypropylen,
BO Oxybutylen
x 0 bis 20, bevorzugt 3 bis 15, insbesondere bevorzugt 4 bis 10,
y 5 bis 100, bevorzugt 8 bis 50, insbesondere bevorzugt 10 bis 30,
z 0 bis 20,

p gleich 2 bis 4, bevorzugt 2 und/oder 3,
und $R^3$ wie in Anspruch 1 definiert ist.

**4.** Polymerzusammensetzungen nach einem der Ansprüche 1 bis 3 **dadurch gekennzeichnet, dass** das numerische Verhältnis von Index a zu Index b gleich 8 bis 18, bevorzugt 9 bis 15 und insbesondere 10 bis 12 ist.

**5.** Polymerzusammensetzungen nach einem der Ansprüche 3 oder 4 **dadurch gekennzeichnet, dass** der Index x zwischen 0,05 und 1,2 mal der Summe der Indices (y + z) ist, bevorzugt zwischen 0,07 und 0,8 mal, insbesondere zwischen 0,1 und 0,5 mal.

**6.** Polymerzusammensetzungen nach einem der Ansprüche 1 bis 5 **dadurch gekennzeichnet, dass** Verbindungen der Formel (I) mit einem bestimmten Gehalt von 0,05 bis 10 Gew.-%, bevorzugt von 0,1 bis 5 Gew.-%, mehr bevorzugt von 0,5 bis 3 Gew.-%, insbesondere von 1 bis 2,5 Gew.-% bezogen auf die Gesamtzusammensetzung enthalten sind.

**7.** Polymerzusammensetzungen nach einem der Ansprüche 1 bis 6 **dadurch gekennzeichnet, dass** die Partikel farbgebende Pigmentpartikel sind.

**8.** Polymerzusammensetzungen nach einem der Ansprüche 1 bis 5 **dadurch gekennzeichnet, dass** die Partikel mit Ausnahme von Titandioxid, Bariumsulfat, Zinksulfid und Lithopone vor der Mischung mit Komponente b) mit Verbindungen der Formel (I) behandelt worden sind.

**9.** Polymerzusammensetzungen nach Anspruch 8 **dadurch gekennzeichnet, dass** sie die Verbindungen der Formel (I) mit einem Gehalt von 0,01 bis 3 Gew.-%, bevorzugt 0,05 bis 2 Gew.-%, mehr bevorzugt von 0,1 bis 2 Gew.-% und insbesondere bevorzugt von 0,15 bis 1 Gew.-% bezogen auf die Partikelmasse als Teil der Zusammensetzung enthalten sind.

**10.** Polymerzusammensetzungen nach einem der Ansprüche 1 bis 9 **dadurch gekennzeichnet, dass** die Zusammensetzungen Partikel ausgewählt aus ATH und MDH aufweisen.

**11.** Polymerzusammensetzungen nach einem der Ansprüche 1 bis 10 **dadurch gekennzeichnet, dass** die Zusammensetzungen eine Verringerung der Wasseraufnahme von 25% gegenüber den Zusammensetzungen aufweisen, die nicht eine Verbindung der Formel (I) enthalten.

**12.** Polymerzusammensetzungen nach einem der Ansprüche 1 bis 10 **dadurch gekennzeichnet, dass** die Zusammensetzungen einen MFI aufweisen, der mindestens 10% über dem MFI liegt, welcher mit der gleichen Zusammensetzung bestimmt wurde, die die gleichen Partikeln in nicht oberflächenbehandelter Form enthält.

**13.** Verwendung von Zusammensetzungen nach einem der Ansprüche 1 bis 10 als Flammschutzzusammensetzungen **dadurch gekennzeichnet, dass** die Zusammensetzungen ATH-Partikel oder MDH-Partikel enthalten.

**14.** Polymerzusammensetzungen nach einem der Ansprüche 10 bis 12 **dadurch gekennzeichnet, dass** die Zusammensetzungen um mindestens eine Brandklasse der UL 94 besser sind, gegenüber den Zusammensetzungen, die nicht eine Verbindung der Formel (I) enthalten .

**15.** Polymerzusammensetzungen nach einem der Ansprüche 1 bis 12 **dadurch gekennzeichnet, dass** die Zusammensetzungen verbesserte mechanische Eigenschaften aufweisen.

**16.** Verfahren zur Oberflächenbehandlung von Partikeln mit Ausnahme von Titandioxid-, Bariumsulfat-, Zinksulfid- und Lithopone-Partikeln **dadurch gekennzeichnet, dass** die Primärpartikel bei der Behandlung mit mindestens einer Verbindung der Formel (I)

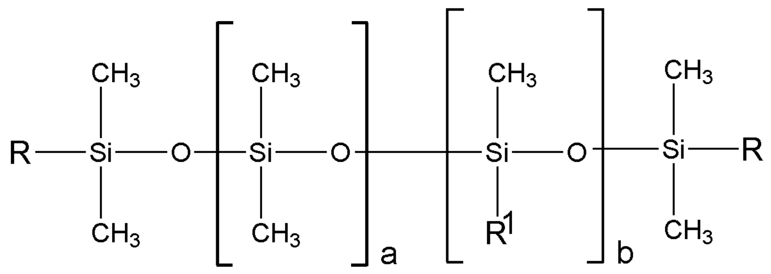

(I)

mit

R gleich oder verschieden $R^1$, Methyl oder Hydroxy
$R^1$ gleich oder verschieden einem Polyetherrest der Formel (III) ist

$$-Z-(O-C_mH_{2m-(n-1)})_o-[O-(AO)-R^3]_n \qquad (III)$$

mit

Z gleich einem verzweigten oder unverzweigten Alkylenrest mit 2 bis 4 Kohlenstoffatomen, bevorzugt 3 Kohlenstoffatomen
m 2 bis 4, bevorzugt 3
n 1 bis 3, bevorzugt 1 oder 2, insbesondere bevorzugt 1
o 0 oder 1, bevorzugt 0
AO gleich oder verschieden einem Oxyalkylenrest enthaltend Oxyethylen-, Oxypropylen- und/oder Oxybutylenreste,
$R^3$ gleich oder verschieden Wasserstoff, ein Alkylrest mit 1 bis 4 Kohlenstoffatomen,
und mit der Maßgabe, dass in $R^1$ die Summe aus Kohlenstoff- und Sauerstoffatomen mindestens 70 ist,
a 20 bis 200
b 1 bis 50,

mit der Maßgabe, dass wenn keiner der Reste R gleich $R^1$ ist, b mindestens 3 ist,
in Kontakt gebracht werden, wobei die Verbindungen der Formel (I) mit einem Anteil von 0,01 bis 2 Gew.-% bezogen auf die Masse der zu behandelnden Primärpartikel eingesetzt werden.

**17.** Verwendung der Partikel nach Anspruche 16 zur Herstellung von Polymerzusammensetzungen.

## Claims

**1.** Polymer compositions containing

a) solid particles,
b) at least one polymer selected from thermoplasts or duromers,
c) at least one compound of the formula (I),

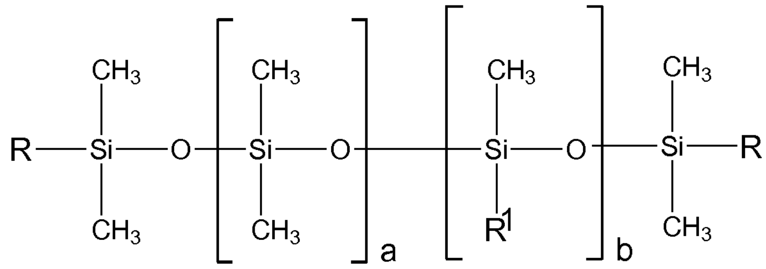

(I)

where

R identically or differently is $R^1$, methyl or hydroxy,
$R^1$ identically or differently is a polyether residue of the formula (III)

$$-Z-(O-C_mH_{2m-(n-1)})_o-[O-(AO)-R^3]_n \qquad (III)$$

where

Z is equal to a branched or unbranched alkylene residue with 2 to 4 carbon atoms,
m 2 to 4,
n 1 to 3,
o 0 or 1,
AO identically or differently is an oxyalkylene residue containing oxyethylene, oxypropylene and/or oxybutylene residues,
$R^3$ identically or differently is hydrogen or an alkyl residue with 1 to 4 carbon atoms,
and with the proviso that in $R^1$ the sum of carbon and oxygen atoms is at least 70,
a 20 to 200
b 1 to 50,

with the proviso that if none of the residues R is equal to $R^1$, b is at least 3,
d) optionally further components

**2.** Polymer compositions according to Claim 1 **characterized in that**

c) at least one compound of the formula (I),

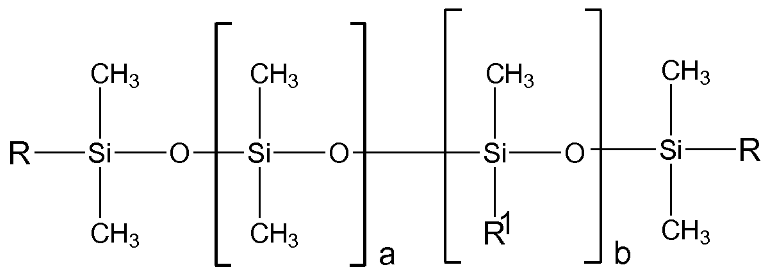

(I)

where

R is equal to methyl,
$R^1$ identically or differently is a polyether residue of the formula (III)

$$-Z-(O-C_mH_{2-(n-1)})_o-[O-(AO)-R^3]_n \qquad (III)$$

where

Z is equal to a branched or unbranched alkylene residue with 3 carbon atoms
m 3
n 1 or 2, particularly preferably 1
o 0
AO is the same as or different from an oxyalkylene residue containing oxyethylene, oxypropylene and/or oxybutylene residues,
$R^3$ is the same as or different from hydrogen, an alkyl residue with 1 to 4 carbon atoms,
and with the proviso that in $R^1$ the sum of carbon and oxygen atoms is at least 70,
a 20 to 200, preferably from 30, from 40, from 50 or from 60 to 170, to 160, to 150, to 140, to 130, to 120 or to 110 and particularly preferably 70 to 100,
b 1 to 50, preferably from 2, from 3, from 4 to 30, to 25 or to 20 and particularly preferably 5 to 15,

with the proviso that if none of the residues R is equal to $R^1$, b is at least 3,

**3.** Polymer compositions according to either of Claims 1 and 2 **characterized in that**
$R^1$ identically or differently is a $-(CH_2)_p$-O-$EO_x$-$PO_y$-$BO_z$--$R^{3,}$
with the proviso that in $R^1$ the sum of carbon and oxygen atoms is at least 70, and
EO is oxyethylene,
PO oxypropylene,
BO oxybutylene
x 0 to 20, preferably 3 to 15, particularly preferably 4 to 10,
y 5 to 100, preferably 8 to 50, particularly preferably 10 to 30,
z 0 to 20,
p equal to 2 to 4, preferably 2 and/or 3,
and $R^3$ is as defined in Claim 1.

**4.** Polymer compositions according to one of Claims 1 to 3 **characterized in that** the numerical ratio of index a to index b is equal to 8 to 18, preferably 9 to 15 and in particular 10 to 12.

**5.** Polymer compositions according to one of Claims 3 or 4 **characterized in that** index x is between 0.05 and 1.2 times the sum of the indices (y + z), preferably between 0.07 and 0.8 times, and in particular between 0.1 and 0.5 times.

**6.** Polymer compositions according to one of Claims 1 to 5 **characterized in that** compounds of the formula (I) with a defined content of 0.05 to 10 wt.%, preferably of 0.1 to 5 wt.%, more preferably of 0.5 to 3 wt.% and in particular of 1 to 2.5 wt.% based on the total composition are contained.

**7.** Polymer compositions according to one of Claims 1 to 6 **characterized in that** the particles are colouring pigment particles.

**8.** Polymer compositions according to one of Claims 1 to 5 **characterized in that** the particles with the exception of titanium dioxide, barium sulphate, zinc sulphide and lithopone have been treated with compounds of the formula (I) before mixing with component b).

**9.** Polymer compositions according to Claim 8 **characterized in that** they contain the compounds of the formula (I) in a content of 0.01 to 3 wt.%, preferably 0.05 to 2 wt.%, more preferably of 0.1 to 2 wt.% and particularly preferably of 0.15 to 1 wt.% based on the particle mass as part of the composition.

**10.** Polymer compositions according to one of Claims 1 to 9 **characterized in that** the compositions contain particles selected from ATH and MDH.

**11.** Polymer compositions according to one of Claims 1 to 10 **characterized in that** the compositions exhibit a decrease in water absorption of 25% compared to the compositions which do not contain a compound of the formula (I).

**12.** Polymer compositions according to one of Claims 1 to 10 **characterized in that** the compositions have an MFI which lies at least 10% above the MFI which was determined with the same composition which contains the same

particles in non-surface-treated form.

**13.** Use of compositions according to one of Claims 1 to 10 as flame retardant compositions **characterized in that** the compositions contain ATH particles or MDH particles.

**14.** Polymer compositions according to one of Claims 10 to 12 **characterized in that** the compositions are better by at least one UL 94 fire class, compared to the compositions which do not contain a compound of the formula (I).

**15.** Polymer compositions according to one of Claims 1 to 12 **characterized in that** the compositions have improved mechanical properties.

**16.** Process for surface treatment of particles with the exception of titanium dioxide, barium sulphate, zinc sulphide and lithopone particles **characterized in that** in the treatment the primary particles are brought into contact with at least one compound of the formula (I)

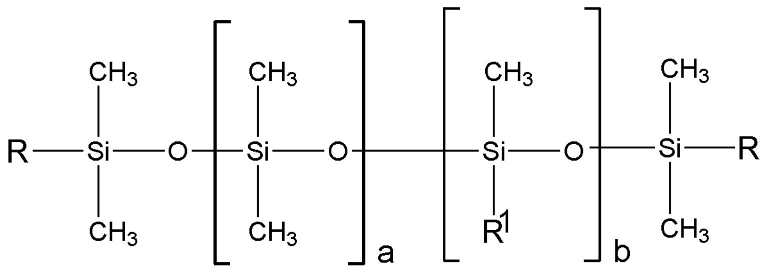

(I)

where

R identically or differently is $R^1$, methyl or hydroxy
$R^1$ identically or differently is a polyether residue of the formula (III)

$$-Z-(O-C_mH_{2m-(n-1)})_o-[O-(AO)-R^3]_n \qquad (III)$$

where

Z is equal to a branched or unbranched alkylene residue with 2 to 4 carbon atoms, preferably 3 carbon atoms
m 2 to 4, preferably 3
n 1 to 3, preferably 1 or 2, particularly preferably 1
o 0 or 1, preferably 0
AO identically or differently is an oxyalkylene residue containing oxyethylene, oxypropylene and/or oxybutylene residues,
$R^3$ identically or differently is hydrogen or an alkyl residue with 1 to 4 carbon atoms,
and with the proviso that in $R^1$ the sum of carbon and oxygen atoms is at least 70,
a 20 to 200
b 1 to 50,

with the proviso that if none of the residues R is equal to $R^1$, b is at least 3,
wherein the compounds of the formula (I) are used in a content of 0.01 to 2 wt.% based on the mass of the primary particles to be treated.

**17.** Use of the particles according to Claim 16 for the production of polymer compositions.

## Revendications

**1.** Compositions polymères, contenant :

a) des particules solides,

b) au moins un polymère, choisi parmi les thermoplastiques ou les duromères,
c) au moins un composé de formule (I)

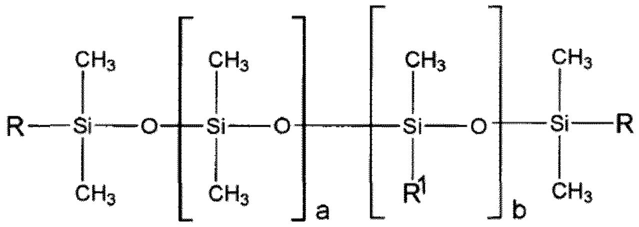

(I)

dans laquelle

les R sont identiques ou différents, et représentent $R^1$, méthyle ou hydroxy,
les $R^1$ sont identiques ou différents, et représentent un radical polyéther de formule (III)

$$-Z-(O-C_mH_{2m-(n-1)})_o-[O-(AO)-R^3]_n \qquad (III)$$

dans laquelle

Z représente un radical alkylène ramifié ou non ramifié de 2 à 4 atomes de carbone,
m représente 2 à 4,
n représente 1 à 3,
o représente 0 ou 1,
les AO sont identiques ou différents, et représentent un radical oxyalkylène contenant les radicaux oxyéthylène, oxypropylène et/ou oxybutylène,
les $R^3$ sont identiques ou différents, et représentent l'hydrogène, un radical alkyle de 1 à 4 atomes de carbone,
à condition que, dans $R^1$, la somme des atomes de carbone et d'oxygène soit d'au moins 70,
a représente 20 à 200,
b représente 1 à 50,
à condition que b représente au moins 3 lorsqu'aucun des radicaux R ne représente $R^1$,

d) éventuellement d'autres composants.

2. Compositions polymères selon la revendication 1, **caractérisées en ce que**

c) au moins un composé de formule (I)

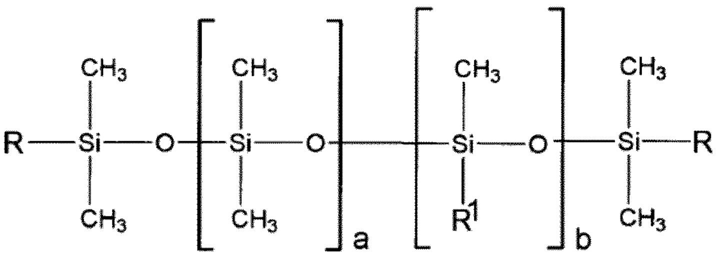

(I)

dans laquelle

R représente méthyle,
les $R^1$ sont identiques ou différents, et représentent un radical polyéther de formule (III)

$$-Z-(O-C_mH_{2m-(n-1)})_o-[O-(AO)-R^3]_n \qquad (III)$$

dans laquelle

Z représente un radical alkylène ramifié ou non ramifié de 3 atomes de carbone,
m représente 3,
n représente 1 ou 2, de manière particulièrement préférée 1,
o représente 0,
les AO sont identiques ou différents, et représentent un radical oxyalkylène contenant les radicaux oxyéthylène, oxypropylène et/ou oxybutylène,
les $R^3$ sont identiques ou différents, et représentent l'hydrogène, un radical alkyle de 1 à 4 atomes de carbone,
à condition que, dans $R^1$, la somme des atomes de carbone et d'oxygène soit d'au moins 70,
a représente 20 à 200, de préférence de 30, de 40, de 50, de 60 à 170, à 160, à 150, à 140, à 130, à 120, à 110 et de manière particulièrement préférée 70 à 100,
b représente 1 à 50, de préférence de 2, de 3, de 4 à 30, à 25, à 20 et de manière particulièrement préférée 5 à 15,
à condition que b représente au moins 3 lorsqu'aucun des radicaux R ne représente $R^1$,

**3.** Compositions polymères selon l'une quelconque des revendications 1 ou 2, **caractérisées en ce que** les $R^1$ sont identiques ou différents, et représentent - $(CH_2)_p$-O-$EO_x$-$PO_y$-$BO_z$-$R^3$,
à condition que, dans $R^1$, la somme des atomes de carbone et d'oxygène soit d'au moins 70,
EO représente oxyéthylène,
PO représente oxypropylène
BO représente oxybutylène
x représente 0 à 20, de préférence 3 à 15, de manière particulièrement préférée 4 à 10,
y représente 5 à 100, de préférence 8 à 50, de manière particulièrement préférée 10 à 30,
z représente 0 à 20,
p représente 2 à 4, de préférence 2 et/ou 3,
et $R^3$ est tel que défini dans la revendication 1.

**4.** Compositions polymères selon l'une quelconque des revendications 1 à 3, **caractérisées en ce que** le rapport numérique entre l'indice a et l'indice b est de 8 à 18, de préférence de 9 à 15 et notamment de 10 à 12.

**5.** Compositions polymères selon l'une quelconque des revendications 3 ou 4, **caractérisées en ce que** l'indice x est compris entre 0,05 et 1,2 fois la somme des indices (y+z), de préférence entre 0,07 et 0,8 fois, notamment entre 0,1 et 0,5 fois.

**6.** Compositions polymères selon l'une quelconque des revendications 1 à 5, **caractérisées en ce que** les composés de formule (I) sont contenus en une teneur déterminée de 0,05 à 10 % en poids, de préférence de 0,1 à 5 % en poids, de manière davantage préférée de 0,5 à 3 % en poids, notamment de 1 à 2,5 % en poids, par rapport à la composition totale.

**7.** Compositions polymères selon l'une quelconque des revendications 1 à 6, **caractérisées en ce que** les particules sont des particules de pigment colorantes.

**8.** Compositions polymères selon l'une quelconque des revendications 1 à 5, **caractérisées en ce que** les particules, à l'exception du dioxyde de titane, du sulfate de baryum, du sulfure de zinc et du lithopone, ont été traitées avec des composés de formule (I) avant le mélange avant le composant b).

**9.** Compositions polymères selon la revendication 8, **caractérisées en ce qu'**elles contiennent les composés de formule (I) en une teneur de 0,01 à 3 % en poids, de préférence de 0,05 à 2 % en poids, de manière davantage préférée de 0,1 à 2 % en poids et de manière particulièrement préférée de 0,15 à 1 % en poids, par rapport à la masse des particules en tant que partie de la composition.

**10.** Compositions polymères selon l'une quelconque des revendications 1 à 9, **caractérisées en ce que** les compositions comprennent des particules choisies parmi ATH et MDH.

**11.** Compositions polymères selon l'une quelconque des revendications 1 à 10, **caractérisées en ce que** les compositions présentent une réduction de l'absorption d'eau de 25 % en comparaison des compositions qui ne contiennent

pas de composé de formule (I).

**12.** Compositions polymères selon l'une quelconque des revendications 1 à 10, **caractérisées en ce que** les compositions présentent un MFI qui est supérieur d'au moins 10 % au MFI qui a été déterminé avec la même composition qui contient les mêmes particules sous forme non traitée en surface.

**13.** Utilisation de compositions selon l'une quelconque des revendications 1 à 10 en tant que compositions ignifuges, **caractérisée en ce que** les compositions contiennent des particules d'ATH ou des particules de MDH.

**14.** Compositions polymères selon l'une quelconque des revendications 10 à 12, **caractérisées en ce que** les compositions sont améliorées d'au moins une classe de feu d'UL 94 en comparaison des compositions qui ne contiennent pas de composé de formule (I).

**15.** Compositions polymères selon l'une quelconque des revendications 1 à 12, **caractérisées en ce que** les compositions présentent des propriétés mécaniques améliorées.

**16.** Procédé de traitement de surface de particules, à l'exception de particules de dioxyde de titane, de sulfate de baryum, de sulfure de zinc et de lithopone, **caractérisé en ce que** les particules primaires sont mises en contact lors du traitement avec au moins un composé de formule (I)

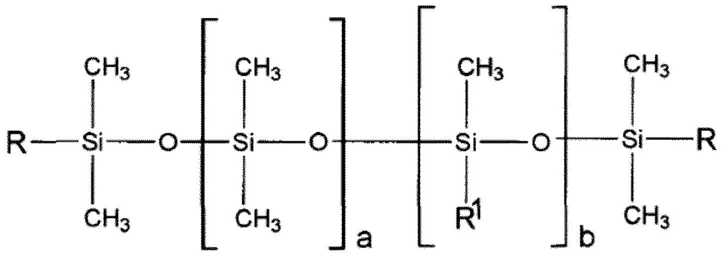

(I)

dans laquelle

les R sont identiques ou différents, et représentent $R^1$, méthyle ou hydroxy,
les $R^1$ sont identiques ou différents, et représentent un radical polyéther de formule (III)

$$-Z-(O-C_mH_{2m(n-1)o})-[O-(AO)-R^3]_n \qquad (III)$$

dans laquelle

Z représente un radical alkylène ramifié ou non ramifié de 2 à 4 atomes de carbone, de préférence de 3 atomes de carbone,
m représente 2 à 4, de préférence 3,
n représente 1 à 3, de préférence 1 ou 2, de manière particulièrement préférée 1,
o représente 0 ou 1, de préférence 0,
les AO sont identiques ou différents, et représentent un radical oxyalkylène contenant les radicaux oxyéthylène, oxypropylène et/ou oxybutylène,
les $R^3$ sont identiques ou différents, et représentent l'hydrogène, un radical alkyle de 1 à 4 atomes de carbone,
à condition que, dans $R^1$, la somme des atomes de carbone et d'oxygène soit d'au moins 70,
a représente 20 à 200,
b représente 1 à 50,
à condition que b représente au moins 3 lorsqu'aucun des radicaux R ne représente $R^1$,
les composés de formule (I) étant utilisés en une proportion de 0,01 à 2 % en poids, par rapport à la masse des particules primaires à traiter.

**17.** Utilisation des particules selon la revendication 16 pour la fabrication de compositions polymères.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- GB 1288581 A
- JP H08120191 A
- DE 4140793
- EP 0546407 A
- EP 0546406 A
- EP 0093310 A
- DE 2555048
- EP 1132417 A
- EP 1520870 A
- EP 1439200 A
- DE 102007057145


### In der Beschreibung aufgeführte Nicht-Patentliteratur


- Thermoplaste. **WIERER.** Kunststoffe (Merkblätter). Springer Verlag, 1987, 95 ff
- Duroplaste. **BECKER, G. W. ; BRAUN, D. ; WOEBCKEN, W.** Kunststoff-Handbuch. Hanser, 1988, vol. 10, 1, , 7, , 476 ff
- **GILBERT ; VARSHNEY ; VAN SOOM ; SCHILLER.** Plate-out in PVC Extrusion - I. Analysis of plate-out. *Journal of Vinyl and Additive Technology,* 2008, vol. 14 (1), 3-9
- **JAN C. J. BART.** Plastics Additives: Advanced Industrial Analysis. IOC Press, 2006, 419-420
- **A. BRANDOLINI ; D. HILLS.** NMR Spectra of Polymers and Polymer Additives. Marcel Dekker, Inc, 2000